(19) Europäisches Patentamt
European Patent Office
Office européen des brevets

(11) **EP 3 809 173 A1**

(12) **EUROPEAN PATENT APPLICATION**

(43) Date of publication:
21.04.2021 Bulletin 2021/16

(51) Int Cl.:
G02B 6/02 (2006.01)  B29D 11/00 (2006.01)
C03B 37/012 (2006.01)  G02B 6/028 (2006.01)

(21) Application number: 20202317.2

(22) Date of filing: 16.10.2020

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 16.10.2019 US 201962915751 P
31.10.2019 NL 2024130

(71) Applicant: Corning Incorporated
Corning, NY 14831 (US)

(72) Inventors:
• HEBGEN, Peter Gottfried
Corning, NY 14831 (US)
• LOGUNOV, Stephan Lvovich
Corning, NY 14831 (US)
• BENTON MATTHEWS III, Hazel
Corning, NY 14831 (US)
• KUMAR MISHRA, Snigdharaj
Corning, NY 14831 (US)

(74) Representative: Arnold & Siedsma
Bezuidenhoutseweg 57
2594 AC The Hague (NL)

(54) **OPTICAL FIBERS HAVING CORE REGIONS WITH REDUCED ALPHA PROFILES**

(57) An optical fiber (100) includes a core portion (102) having a radius $r_C$ and a graded refractive index profile $\Delta_C$ having an alpha value greater than or equal to 1 and less than or equal to 8. The core portion (102) includes a silica-based glass and a down-dopant, where a concentration of the down-dopant is graded such that the concentration of the down-dopant decreases from the radius $r_C$ towards the center of the core portion. The optical fiber (100) comprises a cladding portion (103) surrounding the core portion (102) and having a relative refractive index $\Delta_{OC}$ that is less than a maximum refractive index $\Delta_{Cmax}$ of the core portion.

FIG. 2

**Description**

**BACKGROUND**

*Field*

The present disclosure generally relates to optical fibers and, more specifically, to optical fibers having reduced attenuation and improved microbending losses.

*Technical Background*

Optical networks carry large amounts of information over a single optical fiber. The appearance of new technologies, such as wavelength division multiplexing (WDM) and high channel speed, makes possible the ever-growing demand for network bandwidth. Telecommunication systems that include optical networks, in both submarine and terrestrial applications, depend on optical fibers that are capable of transmitting signals over long distances without degradation. Optical fiber attributes, such as signal attenuation and bend losses, can contribute to the degradation of the signal. Thus, there is an ongoing need for optical fibers having reduced signal attenuation and bend losses.

**SUMMARY**

According to a first aspect of the present disclosure may be directed to an optical fiber that includes a core portion having a radius $r_C$ and a graded refractive index profile $\Delta_C$ having an alpha value greater than or equal to 1 and less than or equal to 8. The core portion may include a silica-based glass and a down-dopant. A concentration of the down-dopant may be graded such that the concentration of the down-dopant decreases from the radius $r_C$ towards the center of the core portion. The optical fiber may further include a cladding portion surrounding the core portion and having a relative refractive index $\Delta_{OC}$, wherein $\Delta_{OC}$ is less than a maximum refractive index $\Delta_{Cmax}$ of the core portion.
A second aspect may include the first aspect, in which the core portion may be substantially free of up-dopants.
A third aspect may include either of the first or second aspects, in which the core portion may be substantially free of $GeO_2$.
A fourth aspect may include any of the first through third aspects, in which the down-dopant may be fluorine.
A fifth aspect may include the first aspect, in which the core portion may include an up-dopant and a concentration of the up-dopant may be substantially constant throughout the core portion. In some embodiments, the up-dopant may include chlorine.
A sixth aspect may include any of the firs through fifth aspects, in which the optical fiber may have a total attenuation at a wavelength of 1550 nm of less than or equal to 0.17.
A seventh aspect may include any of the first through sixth aspects, in which a small angle scattering of the optical fiber at 1550 nm wavelength is less than 4% of the uniform angular scattering at 1550 nm wavelength for the optical fiber 100.
An eighth aspect may include any of the first through seventh aspects, in which the cladding portion may further include a low-index trench and an outer cladding. The low-index trench may be positioned between the core portion and the outer cladding. The low-index trench may have a relative refractive index $\Delta_T$ and the outer cladding having the relative refractive index $\Delta_{OC}$, wherein $\Delta_{Cmax} > \Delta_{OC} > \Delta_T$.
A ninth aspect may include the eighth aspect, in which the low-index trench may directly contact the core portion and the outer cladding.
A tenth aspect may include either one of the eighth or ninth aspects, in which the low-index trench may be formed from a silica-based glass.
An eleventh aspect may include any of the eighth through tenth aspects, in which the low-index trench may be formed from silica glass doped with a trench down-dopant.
A twelfth aspect may include the eleventh aspect, in which the trench down-dopant may be the same or different from the down-dopant of the core portion.
A thirteenth aspect may include any of the eighth through twelfth aspects, in which the cladding portion may further include an inner cladding positioned between the core portion and the low-index trench. The inner cladding may have a relative refractive index $\Delta_{IC}$ and may be formed from a silica-based glass.
A fourteenth aspect may include any of the first through thirteenth aspects, in which optical fiber may have microbend losses at 1550 nm wavelength of less than or equal to 0.2 dB/km for an effective area (Aeff) of greater than 120 $\mu m^2$, less than or equal to 0.1 dB/km for an effective area (Aeff) of from 100 $\mu m^2$ to 120 $\mu m^2$, or less than or equal to 0.05 dB/km for an effective area (Aeff) of less than 100 $\mu m^2$.
A fifteenth aspect of the present disclosure may be directed to an optical fiber that includes a core portion having a radius $r_C$ and a graded relative refractive index $\Delta_C$ having an alpha value greater than or equal to 1 and less than or equal to 8. The core portion may include a silica-based glass and an up-dopant. A concentration of the up-dopant may be graded such that a concentration of the up-dopant may decrease from a maximum up-dopant concentration at the center of the core portion to a minimum up-dopant concentration at the outer radius $r_C$ of the core portion. The optical fiber may further include a cladding portion surrounding the core portion and having a relative refractive index $\Delta_{OC}$ less than a maximum refractive index $\Delta_{Cmax}$ of the core portion.

A sixteenth aspect may include the fifteenth aspect, in which the up-dopant may include chlorine.

A seventeenth aspect may include either of the fifteenth or sixteenth aspects, in which the core portion may be substantially free of a down-dopant.

An eighteenth aspect may include either of the fifteenth or sixteenth aspects, in which the core portion may include a down-dopant.

A nineteenth aspect may include the eighteenth aspects, in which a concentration of the down-dopant may be substantially uniform throughout the core portion.

A twentieth aspect may include either of the eighteenth or nineteenth aspect, in which the down-dopant may be fluorine.

A twenty-first aspect may include any of the fifteenth through twentieth aspects, in which the optical fiber may have a total attenuation at a wavelength of 1550 nm of less than or equal to 0.17.

A twenty-second aspect may include any of the fifteenth through twenty-first aspects, in which a small angle scattering of the optical fiber at 1550 nm wavelength may be less than 4% of the uniform angular scattering at 1550 nm wavelength for the optical fiber 100.

A twenty-third aspect may include any of the fifteenth through twenty-second aspects, in which the cladding portion may further include a low-index trench and an outer cladding. The low-index trench may be positioned between the core portion and the outer cladding. The low-index trench may have a relative refractive index $\Delta_T$ and the outer cladding having the relative refractive index $\Delta_{OC}$, wherein $\Delta_{Cmax} > \Delta_{OC} > \Delta_T$.

A twenty-fourth aspect may include the twenty-third aspect, in which the the low-index trench may directly contact the core portion and the outer cladding.

A twenty-fifth aspect may include either of the twenty-third or twenty-fourth aspects, in which the the low-index trench may be formed from a silica-based glass.

A twenty-sixth aspect may include any of the twenty-third through twenty-fifth aspects, in which the cladding portion may further include an inner cladding positioned between the core portion and the low-index trench. The inner cladding may have a relative refractive index $\Delta_{IC}$ and is formed from a silica-based glass.

A twenty-seventh aspect may include any of the fifteenth through twenty-sixth aspects, in which the optical fiber may have microbend losses at 1550 nm wavelength of less than or equal to 0.2 dB/km for an effective area (Aeff) of greater than 120 $\mu m^2$, less than or equal to 0.1 dB/km for an effective area (Aeff) of from 100 $\mu m^2$ to 120 $\mu m^2$, or less than or equal to 0.05 dB/km for an effective area (Aeff) of less than 100 $\mu m^2$.

A twenty-eighth aspect of the present disclosure may be directed to preform for producing an optical fiber, the preform including a preform core having a preform core outer radius and a graded relative refractive index $\Delta_{PC}$ having an alpha value greater than or equal to 1 and less than or equal to 8. The preform core may include a silica-based glass and a dopant having a graded concentration profile that increases or decreases from the preform core outer radius inward towards a center of the preform core. The preform may further include a preform cladding portion surrounding the preform core and having a relative refractive index $\Delta_{POC}$ less than a maximum refractive index $\Delta_{PCmax}$ of the preform core.

A twenty-ninth aspect may include the twenty-eighth aspect, in which the dopant may include a down-dopant and a concentration of the down-dopant may decrease from the preform core outer radius towards the center of the preform core.

A thirtieth aspect may include either the twenty-eighth or twenty-ninth aspects, in which the preform core may be substantially free of up-dopants.

A thirty-first aspect may include any of the twenty-eighth through thirtieth aspects, in which the down-dopant comprises fluorine.

A thirty-second aspect may include any of the twenty-eighth, twenty-ninth, or thirty-first aspects, in which the preform core may include an up-dopant and a concentration of the up-dopant may be substantially constant throughout the preform core. In one or more embodiments, the up-dopant may include chlorine.

A thirty-third aspect may include the twenty-eighth aspect, in which the dopant may include an up-dopant and a concentration of the up-dopant may decrease from a maximum up-dopant concentration at the center of the preform core to a minimum up-dopant concentration at the preform core outer radius.

A thirty-fourth aspect may include the thirty-third aspect, in which the up-dopant comprises chlorine.

A thirty-fifth aspect may include either the thirty-third or thirty-fourth aspect, in which the preform core may be substantially free of a down-dopant.

A thirty-sixth aspect may include either the thirty-third or thirty-fourth aspect, in which the preform core may include a down-dopant.

A thirty-seventh aspect may include the thirty-sixth aspect, in which a concentration of the down-dopant is substantially uniform throughout the preform core.

A thirty-eighth aspect may include either the thirty-sixth or thirty-seventh aspects, in which the down-dopant comprises fluorine.

A thirty-ninth aspect may include any of the twenty-eighth through thirty-eighth aspects, in which the preform cladding portion further includes a preform low-index trench and an preform outer cladding. The preform low-index trench may be positioned between the preform core and the preform outer cladding. The preform low-index trench may have a relative refractive index $\Delta_{PT}$ and the preform outer cladding having the relative refractive index $\Delta_{POC}$, where $\Delta_{PCmax}$ > $\Delta_{POC}$ > $\Delta_{PT}$.

A fortieth aspect may include the thirty-ninth aspect, in which the preform low-index trench may directly contact the preform core and the preform outer cladding.

A forty-first aspect may include either the thirty-ninth or fortieth aspects, in which the preform cladding portion may further include a preform inner cladding positioned between the preform core and the preform low-index trench. The preform inner cladding may have a relative refractive index $\Delta_{PIC}$ and may be formed from silica-based glass.

A forty-second aspect of the present disclosure may be directed to a method of preparing an optical fiber, the method including forming a porous preform core comprising a silica-based composition, forming a graded concentration profile of a dopant within the porous preform core, and consolidating the porous preform core to produce a consolidated preform core having a graded concentration profile of the dopant. The graded concentration profile of the dopant may produce a graded refractive index profile within the consolidated preform core, the graded refractive index profile having an alpha value greater than or equal to 1 and less than or equal to 8. The method may further include forming a preform cladding portion around the porous preform core, the preform cladding portion comprising at least a silica-based glass. The method may further include drawing the preform to produce the optical fiber.

A forty-third aspect may include the forty-second aspect, in which forming the graded concentration profile of a dopant may include doping the porous preform core with a down-dopant, wherein doping forms a graded concentration profile of the down-dopant in which a concentration of the down-dopant is greatest at the outer radius of the porous preform core and decreases with decreasing radius.

A forty-fourth aspect may include either the forty-second or forty-third aspects, in which the down-dopant may be fluorine.

A forty-fifth aspect may include the forty-second aspect, in which forming the graded concentration profile of a dopant in the porous preform core may include doping the porous preform core with an up-dopant to produce a doped porous preform core having a uniform concentration of up-dopant and contacting the doped porous preform core with an oxidizing atmosphere. Contact with the oxidizing atmosphere may cause oxidation of the up-dopant at the outer surface of the doped porous preform core to remove the up-dopant from the outer surface of the doped porous preform core to produce a graded concentration profile of up-dopant, in which a concentration of the up-dopant is greatest at a center of the porous preform core and decreases with increasing radius. In one or more embodiments, the up-dopant may be chlorine.

Additional features and advantages of the optical fibers described herein will be set forth in the detailed description that follows, and in part will be readily apparent to those skilled in the art from that description or recognized by practicing the embodiments described herein, including the detailed description which follows, the claims, as well as the appended drawings.

The disclosure also includes the following clauses:

1. An optical fiber comprising:

a core portion having a radius $r_C$ and a graded refractive index profile $\Delta_C$ having an alpha value greater than or equal to 1 and less than or equal to 8, the core portion comprising:

a silica-based glass; and
a dopant; and

a cladding portion surrounding the core portion and having a relative refractive index $\Delta OC$, wherein $\Delta OC$ is less than a maximum refractive index $\Delta Cmax$ of the core portion.

2. The optical fiber of clause 1, wherein the dopant is a down dopant, a dopant having a propensity to lower the refractive index of glass relative to pure, un-doped $SiO_2$.

3. The optical fiber of clause 2, wherein a concentration of the down-dopant is graded such that the concentration of the down-dopant decreases from the radius $r_C$ towards a center of the core portion, or wherein a concentration of the down-dopant is substantially constant throughout the core portion.

4. The optical fiber of clause 1, wherein the dopant is an up-dopant, a dopant that raises the refractive index of glass relative to pure, un-doped silica ($SiO_2$).

5. The optical fiber of clause 4, wherein a concentration of the up dopant is graded such that a concentration of the up-dopant decreases from a maximum up-dopant concentration at a center of the core portion to a minimum up-dopant concentration at the outer radius $r_C$ of the core portion, or wherein a concentration of the up-dopant is substantially constant throughout the core portion.

6. The optical fiber of any of the clauses 1-3, wherein the core portion is substantially free of $GeO_2$.

7. The optical fiber of any of the clauses 1-3, 6, wherein the down-dopant comprises fluorine.

8. The optical fiber of any of the clauses 4 or 5, wherein the up-dopant comprises chlorine.

9. The optical fiber of any of the clauses 4, 5 or 9, wherein the core portion is substantially free of a down-dopant.

10. The optical fiber of any of the clauses 1-3, 6-7, wherein the core portion is substantially free of up-dopants.

11. The optical fiber of any of the preceding clauses, wherein the optical fiber has a total attenuation at a wavelength of 1550 nm of less than or equal to 0.17.

12. The optical fiber of any of the preceding clauses, wherein a small angle scattering of the optical fiber at 1550 nm wavelength is less than 4% of the uniform angular scattering at 1550 nm wavelength for the optical fiber 100.

13. The optical fiber of any of the preceding clauses, wherein the cladding portion further comprises a low-index trench and an outer cladding, the low-index trench positioned between the core portion and the outer cladding, the low-index trench having a relative refractive index $\Delta_T$ and the outer cladding having the relative refractive index $\Delta_{OC}$, wherein $\Delta C_{max} > \Delta_{OC} > \Delta_T$.

14. The optical fiber of clause 13, wherein the low-index trench directly contacts the core portion and the outer cladding.

15. The optical fiber of clause 13 or 14, wherein the low-index trench is formed from a silica-based glass.

16. The optical fiber of any of the preceding clauses 13-15, wherein the low-index trench is formed from silica glass doped with a trench down-dopant.

17. The optical fiber of clause 16, wherein the trench down-dopant is the same or different from the down-dopant of the core portion.

18. The optical fiber of any of the preceding clauses 13-17, wherein the cladding portion further comprises an inner cladding positioned between the core portion and the low-index trench, wherein the inner cladding has a relative refractive index $\Delta_{IC}$ and is formed from a silica-based glass.

19. The optical fiber of any of the preceding clauses, where the optical fiber has microbend losses at 1550 nm wavelength of less than or equal to 0.2 dB/km for an effective area (Aeff) of greater than 120 $\mu m^2$, less than or equal to 0.1 dB/km for an effective area (Aeff) of from 100 $\mu m^2$ to 120 $\mu m^2$, or less than or equal to 0.05 dB/km for an effective area (Aeff) of less than 100 $\mu m^2$.

20. A preform for producing an optical fiber, the preform comprising:
a preform core having a preform core outer radius and a graded relative refractive index $\Delta_{PC}$ having an alpha value greater than or equal to 1 and less than or equal to 8, the preform core comprising:

   a silica-based glass;

a dopant, preferably having a graded concentration profile that increases or decreases from the preform core outer radius inward towards a center of the preform core; and

a preform cladding portion surrounding the preform core and having a relative refractive index $\Delta_{POC}$ less than a maximum refractive index $\Delta_{PCmax}$ of the preform core.

21. The preform of clause 20, wherein the preform core comprises an up-dopant.

22. The preform of clause 21, wherein the up-dopant comprises chlorine.

23. The preform of clause 21 or 22, wherein a concentration of the up-dopant decreases from a maximum up-dopant concentration at the center of the preform core to a minimum up-dopant concentration at the preform core outer radius, or wherein a concentration of the up-dopant is substantially constant throughout the preform core.

24. The preform of any of the clauses 20-23, wherein the preform core is substantially free of a down-dopant.

25. The preform of any of the clauses 20-23, wherein the dopant comprises a down-dopant and preferably wherein a concentration of the down-dopant decreases from the preform core outer radius towards the center of the preform core, or wherein a concentration of the down-dopant is substantially uniform throughout the preform core.

26. The preform of clauses 25, wherein the down-dopant comprises fluorine.

27. The preform of any of the preceding clauses 20-26, wherein the preform cladding portion further comprises a preform low-index trench and an preform outer cladding, the preform low-index trench being positioned between the preform core and the preform outer cladding, the preform low-index trench having a relative refractive index $\Delta_{PT}$ and the preform outer cladding having the relative refractive index $\Delta_{POC}$, wherein $\Delta_{PCmax} > \Delta_{POC} > \Delta_{PT}$.

28. The preform of clause 27, wherein the preform low-index trench directly contacts the preform core and the preform outer cladding.

29. The preform of clause 27 or 28, wherein the preform cladding portion further comprises a preform inner cladding positioned between the preform core and the preform low-index trench, wherein the preform inner cladding has a relative refractive index $\Delta_{PIC}$ and is formed from silica-based glass.

30. A method of providing a preform for an optical fiber, the method comprising:

forming a preform core comprising a silica-based composition;
forming a graded concentration profile of a dopant within the preform core;
consolidating the preform core to produce a consolidated preform core having a graded concentration profile of the dopant, where the graded concentration profile of the dopant produces a graded refractive index profile within the consolidated preform core, the graded refractive index profile having an alpha value greater than or equal to 1 and less than or equal to 8;
forming a preform cladding portion around the preform core, the preform cladding portion comprising at least a silica-based glass.

31. The method of clause 30, wherein forming a graded concentration profile of a dopant comprises doping the preform core with a down-dopant, wherein doping forms a graded concentration profile of the down-dopant in which a concentration of the down-dopant is greatest at the outer radius of the porous preform core and decreases with decreasing radius.

32. The method of clause 31, wherein the down-dopant is fluorine.

33. The method of clause 30, wherein forming the graded concentration profile of a dopant in the preform core comprises:

doping the preform core with an up-dopant to produce a doped preform core having a uniform concentration of up-dopant; and
contacting the doped preform core with an oxidizing atmosphere, where contact with the oxidizing atmosphere causes oxidation of the up-dopant at the outer surface of the doped preform core to remove the up-dopant from the outer surface of the doped preform core to produce a graded concentration profile of up-dopant, in which a concentration of the up-dopant is greatest at a center of the preform core and decreases with increasing radius.

34. The method of clause 33 in which the up-dopant is chlorine.

35. The method of any of the preceding clauses 30-34, further comprising the step of drawing the preform to produce an optical fiber.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

## BRIEF DESCRIPTION OF THE DRAWINGS

FIG. 1 schematically depicts a radial cross section of an optical fiber according to one or more embodiments shown and described herein;
FIG. 2 graphically depicts a modeled relative refractive index profile of the optical fiber of FIG. 1 as a function of the radius R of the glass portion of the optical fiber, according to one or more embodiments shown and described herein;
FIG. 3 graphically depicts a measured relative refractive index profile (y-axis) as a function of radius R (x-axis) for a core portion of an optical fiber having a composition that is graded in the radial direction, according to one or more embodiments shown and described herein;
FIG. 4 graphically depicts a measured relative refractive index profile (y-axis) as function of the radius R (x-axis) for a core portion of another optical fiber having a composition that is graded in the radial direction, according to one or more embodiments shown and described herein;
FIG. 5 graphically depicts measured light scattering (y-axis) as a function of incident angle (x-axis) for an optical fiber of the prior art having a core with a uniform composition and a step index in the refractive index profile;
FIG. 6 graphically depicts measured light scattering (y-axis) as a function of incident angle (x-axis) for the optical fiber of FIG. 3 (ref. 304) having the graded composition in the core portion, according to one or more embodiments shown and described herein;
FIG. 7 graphically depicts measured light scattering (y-axis) as a function of incident angle (x-axis) for another optical fiber of the prior art having a core with a uniform composition and a step index in the refractive index profile;
FIG. 8 graphically depicts measured light scattering (y-axis) as a function of incident angle (x-axis) for the optical fiber of FIG. 4 (ref. 404) having the graded composition in the core portion, according to one or more embodiments shown and described herein;
FIG. 9 graphically depicts measured light scattering (y-axis) as a function of incident angle (x-axis) for an optical fiber of the prior art that includes germanium oxide as an up-dopant in the core portion;
FIG. 10 schematically depicts a radial cross section of another optical fiber according to one or more embodiments shown and described herein;
FIG. 11 graphically depicts a modeled relative refractive index profile of the optical fiber of FIG. 3 as a function of the radius R of the glass portion of the optical fiber according to one or more embodiments shown and described herein;
FIG. 12 schematically depicts a radial cross section of yet another optical fiber according to one or more embodiments shown and described herein;
FIG. 13 graphically depicts a modeled relative refractive index profile of the optical fiber of FIG. 6 as a function of the radius R of the glass portion of the optical fiber, according to one or more embodiments shown and described herein;
FIG. 14 graphically depicts a modeled relative refractive index profile (y-axis) as a function of fiber radius R (x-axis) for the optical fiber of Example 3, according to one or more embodiments shown and described herein;
FIG. 15 graphically depicts a modeled relative refractive index profile (y-axis) as a function of fiber radius R (x-axis) for the optical fiber of Example 4, according to one or more embodiments shown and described herein;
FIG. 16 graphically depicts a modeled relative refractive index profile (y-axis) as a function of fiber radius R (x-axis) for the optical fiber of Example 5, according to one or more embodiments shown and described herein; and
FIG. 17 graphically depicts measured relative refractive index profiles (y-axis) as a function of the radius R (x-axis) for preform cores prepared in of Comparative Example 6 and Examples 7-12 for making the optical fibers, according to one or more embodiments shown and described herein.

**DETAILED DESCRIPTION**

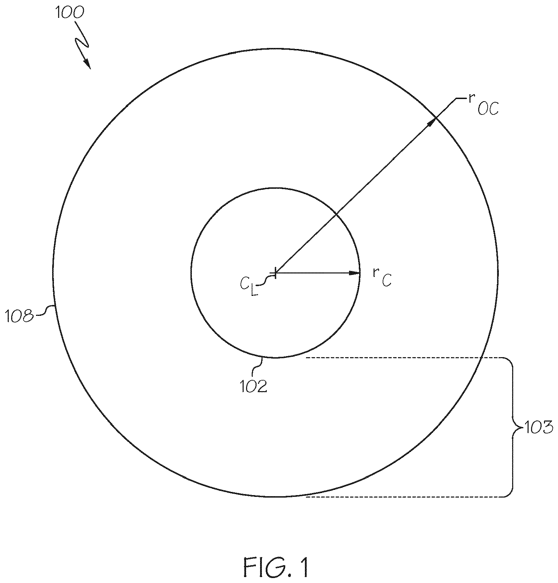

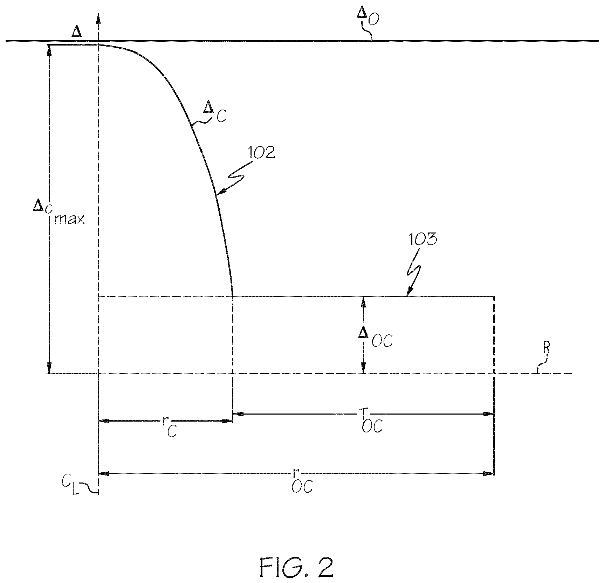

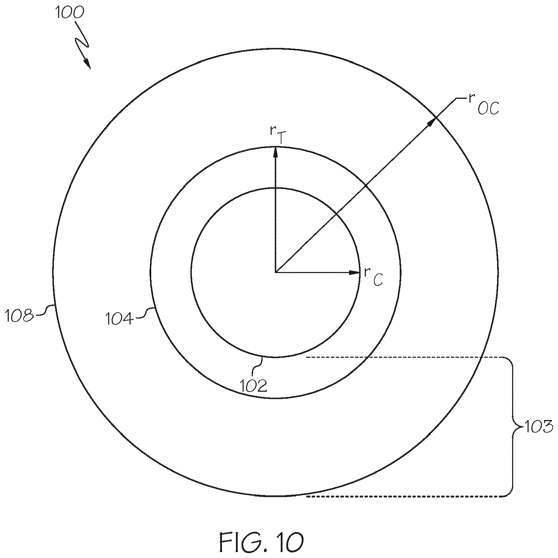

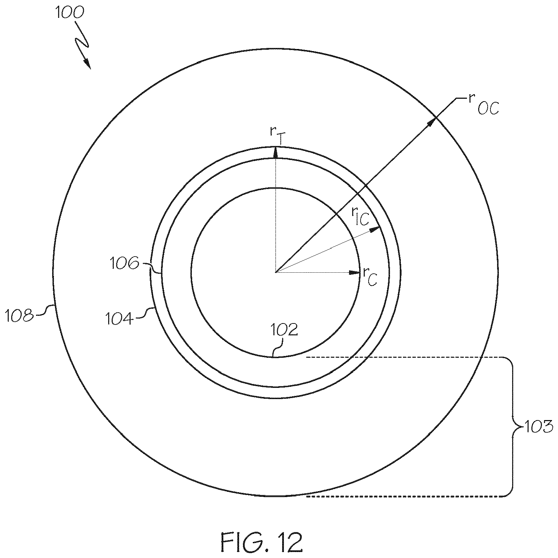

Reference will now be made in detail to various embodiments of the optical fibers of the present disclosure, examples of which are schematically depicted in the accompanying drawings. Whenever possible, the same reference numerals will be used throughout the drawings to refer to the same or like parts. A radial cross-section and relative refractive index profile of one embodiment of an optical fiber 100 according to the present disclosure are schematically depicted in FIGS. 1 and 2, respectively. The optical fiber 100 may include a core portion 102 comprising an outer radius $r_C$ and a maximum relative refractive index $\Delta_{Cmax}$ relative to pure silica glass. A cladding portion 103 may surround the core portion 102 and may be in direct contact with the core portion 102. The core portion 102 may include a silica glass and one or more dopants. A concentration of the dopants may be graded such that the core portion 102 may have a graded relative refractive index $\Delta_C$ with an alpha ($\alpha$) value greater than or equal to 1 and less than or equal to 8. The cladding portion 103 surrounding the core portion 102 may have a relative refractive index $\Delta_{OC}$ and may be formed from a silica-based glass. The maximum relative refractive index $\Delta_{Cmax}$ of the core portion 102 may be greater than the relative refractive index $\Delta_{OC}$ of the cladding portion 103. The optical fiber 100 may have a total attenuation at a wavelength of 1550 nm of less than or equal to 0.17 decibels per kilometer (dB/km). The small angle scattering of the optical fiber 100 at 1550 nm wavelength may be less than or equal to 4% of of the uniform angular scattering at 1550 nm wavelength for the optical fiber 100. Referring to FIG. 10, in one or more embodiments, the cladding portion 103 of the optical fiber may further comprise a low-index trench 104 and an outer cladding 108 with the low-index trench 104 disposed between the core portion 102 and the outer cladding 108. Referring to FIG. 12, in such embodiments, the cladding portion 103 may further include an inner cladding 106 disposed between the core portion 102 and the low-index trench 104.

Various embodiments of the optical fiber 100 with a core portion 102 comprising a silica-based glass, at least one dopant with a graded concentration profile, and a graded refractive index profile $\Delta_C$ will be described herein with specific reference to the appended drawings.

As used herein, the term "refractive index profile" or "relative refractive index profile," as used herein, is the relationship between the refractive index or the relative refractive index and the radius R of the fiber.

As used herein, the term "relative refractive index," as used herein, is defined according to the following Equation 1 (EQU. 1).

$$\Delta(r)\% = 100 \times \frac{(n(r)^2 - n_{REF}^2)}{2n(r)^2} \qquad \text{EQU. 1}$$

In EQU. 1, $n(r)$ is the refractive index at radius r of the optical fiber, unless otherwise specified, and r = 0 corresponds to the centerline $C_L$ of the fiber. The relative refractive index is defined at 1550 nm unless otherwise specified. The reference index $n_{REF}$ refers to the refractive index of a reference glass composition, such as but not limited to the refractive index of a cladding glass composition, a pure (i.e., un-doped) silica glass (i.e., $n_{REF}$ = 1.444374 at a wavelength of 1550 nm), or other glass composition. As used herein, the relative refractive index is represented by $\Delta$ and its values are given in units of "%," unless otherwise specified. In cases where the refractive index of a region is less than the reference index $n_{REF}$, the relative index percent is negative and is referred to as having a depressed region or depressed-index relative to the reference index $n_{REF}$, and the minimum relative refractive index is calculated at the point at which the relative index is most negative unless otherwise specified. In cases where the refractive index of a region is greater than the reference index $n_{REF}$, the relative index percent is positive and the region can be said to be raised or to have a positive index relative to the reference index $n_{REF}$.

The term "up-dopant," as used herein, refers to a dopant that raises the refractive index of glass relative to pure, un-doped silica ($SiO_2$). The term "down-dopant," as used herein, refers to a dopant that has a propensity to lower the refractive index of glass relative to pure, un-doped $SiO_2$. An up-dopant may be present in a region of an optical fiber having a negative relative refractive index when accompanied by one or more other dopants that are not up-dopants. Likewise, one or more other dopants that are not up-dopants may be present in a region of an optical fiber having a positive relative refractive index. A down-dopant may be present in a region of an optical fiber having a positive relative refractive index when accompanied by one or more other dopants that are not down-dopants. Likewise, one or more other dopants that are not down-dopants may be present in a region of an optical fiber having a negative relative refractive index.

As used herein, the term "pure silica core" may refer to a core portion of an optical fiber that is substantially free of intentionally added dopants. However, a pure silica core may include elements and compounds that are naturally present as impurities in glass fibers made from silica.

As used herein, the term "substantially free" of a component may refer to a composition, fiber, or atmosphere that includes less than 0.01 percent by weight of the component. For example, a core portion of an optical fiber that is substantially free of dopants may include less than 0.01 percent by weight of the dopants.

The term "a-profile" or "alpha profile," as used herein, refers to a relative refractive index profile of the core portion, expressed in terms of $\Delta$ which is in units of "%," where r is the radius and which follows the following Equation 2 (EQU. 2).

$$\Delta = \Delta_{Cmax}\left[1 - \left(\frac{r}{r_C}\right)^{\alpha}\right] \qquad\qquad \text{EQU. 2}$$

In EQU. 2, $\Delta_{\mathbf{Cmax}}$ is the maximum relative refractive index of the core portion, $\mathbf{r_C}$ is the radius of the core portion, r is in the range $\mathbf{r_i} \leq \mathbf{r} \leq \mathbf{r_f}$, $\Delta$ is as defined above, $\mathbf{r_i}$ is the initial point of the alpha profile, $\mathbf{r_f}$ is the final point of the alpha profile, and $\alpha$ or alpha is an exponent which is a real number. For a graded refractive index profile, the alpha value is less than 10 (e.g., $\alpha$<10). For an indexed or non-graded refractive index profile, the alpha value is greater than or equal to 10.

One measure of the bend performance of the optical fibers described herein is the pin array bend test, which is used to compare the relative resistance of the optical fibers to bending. To perform this test, attenuation is measured for an optical fiber with essentially no induced bending loss. The optical fiber is then woven about the pin array and the attenuation is once again measured. The loss induced by bending, typically expressed in units of dB, is the difference between the two attenuation measurements. The pin array is a set of ten cylindrical pins arranged in a single row and held in a fixed vertical position on a flat surface. The pin spacing is 5 mm, center to center. The pin diameter is 0.67 mm. The optical fiber is caused to pass on opposite sides of adjacent pins. During testing, the optical fiber is placed under a tension sufficient to make the optical fiber conform to the portion of the periphery of the pins contacted by the fiber. The test pertains to macro-bend resistance of the optical fiber.

Another type of bend test is the lateral load microbend test. In this so-called "lateral load" test (LLWM), a prescribed length of waveguide fiber is placed between two flat plates. A #70 wire mesh is attached to one of the plates. A known length of waveguide fiber is sandwiched between the plates and a reference attenuation is measured while the plates are pressed together with a force of 30 Newtons. A 70 Newton force is then applied to the plates and the increase in attenuation in dB/m is measured. The increase in attenuation is the lateral load attenuation of the waveguide in dB/m at a specified wavelength (typically within the range of 1200-1700 nm, e.g., 1310 nm or 1550 nm or 1625 nm).

Another type of bend test is the wire mesh covered drum microbend test (WMCD). In this test, a 400 mm diameter aluminum drum is wrapped with wire mesh. The mesh is wrapped tightly without stretching, and should have no holes, dips, or damage. The wire mesh is sourced from McMaster-Carr Supply Company (Cleveland, OH), part number 85385T106, corrosion-resistant type 304 stainless steel woven wire cloth, mesh per linear inch: 165x165, wire diameter: 0.0019", width opening: 0.0041", open area %: 44.0. A prescribed length (750 meters) of waveguide fiber is wound at 1 m/s on the wire mesh drum at 0.050 centimeter take-up pitch while applying 80 (+/- 1) grams tension. The ends of the prescribed length of fiber are taped to maintain tension and there are no fiber crossovers. The attenuation of the optical fiber is measured at a specified wavelength (typically within the range of 1200-1700 nm, e.g., 1310 nm or 1550 nm or 1625 nm); a reference attenuation is measured on the optical fiber wound on a smooth drum. The increase in attenuation is the wire mesh covered drum attenuation of the waveguide in dB/km at a specified wavelength (typically within the range of 1200-1700 nm, e.g., 1310 nm or 1550 nm or 1625 nm).

As used herein, the "effective area" of an optical fiber is the area of the optical fiber in which light is propagated and is defined by the following Equation 3 (EQU. 3).

$$A_{eff} = 2\pi \times \frac{\left(\int_0^\infty E^2\, r\, dr\right)^2}{\int_0^\infty E^4 r\, dr} \qquad\qquad \text{EQU. 3}$$

In EQU. 3, E is the electric field associated with light propagated in the fiber and r is the radius of the fiber. The effective area is determined at a wavelength of 1550 nm, unless otherwise specified.

Mode field diameter (MFD) is a measure of the spot size or beam width of light propagating in a single mode fiber. Mode-field diameter is a function of the source wavelength, fiber core radius and fiber refractive index profile. MFD is measured using the Peterman II method where MFD is defined according to the following Equation 4 (EQU. 4).

*MFD* = 2w, and

$$w^2 = 2 \times \frac{\int_0^\infty E^2\, rdr}{\int_0^\infty (dE/dr)^2}\, rdr \qquad\qquad \text{EQU. 4}$$

In EQU. 4, E is the electric field distribution in the fiber and r is the radius of the fiber.

The cutoff wavelength of a mode is the minimum wavelength beyond which a mode ceases to propagate in the optical fiber. The cutoff wavelength of a single mode fiber is the minimum wavelength at which an optical fiber will support only one propagating mode. The cutoff wavelength of a single mode fiber corresponds to the highest cutoff wavelength among the higher order modes. Typically the highest cutoff wavelength corresponds to the cutoff wavelength of the LP11 mode. If the operative wavelength is below the cutoff wavelength, multimode operation may take place and the introduction of additional sources of dispersion may limit a fiber's information carrying capacity. A mathematical definition can be found in Single Mode Fiber Optics, Jeunhomme, pp. 39 44, Marcel Dekker, New York, 1990 wherein the theoretical fiber cutoff is described as the wavelength at which the mode propagation constant becomes equal to the plane wave propagation constant in the outer cladding. This theoretical wavelength is appropriate for an infinitely long, perfectly straight fiber that has no diameter variations.

The cabled cutoff wavelength, or "cabled cutoff' can be approximated by the 22 m cabled cutoff test described in EIA-455-170 Cable Cutoff Wavelength of Single-mode Fiber by Transmitted Power, or "FOTP-170". Cable cutoff, as used herein, means the value obtained using the approximated test.

Chromatic dispersion or dispersion of a fiber is the sum of the material dispersion, the waveguide dispersion, and the inter-modal dispersion. In the case of single mode waveguide fibers the inter-modal dispersion is zero. The zero dispersion wavelength is a wavelength at which the dispersion has a value of zero. Dispersion slope is the rate of change of dispersion with respect to wavelength.

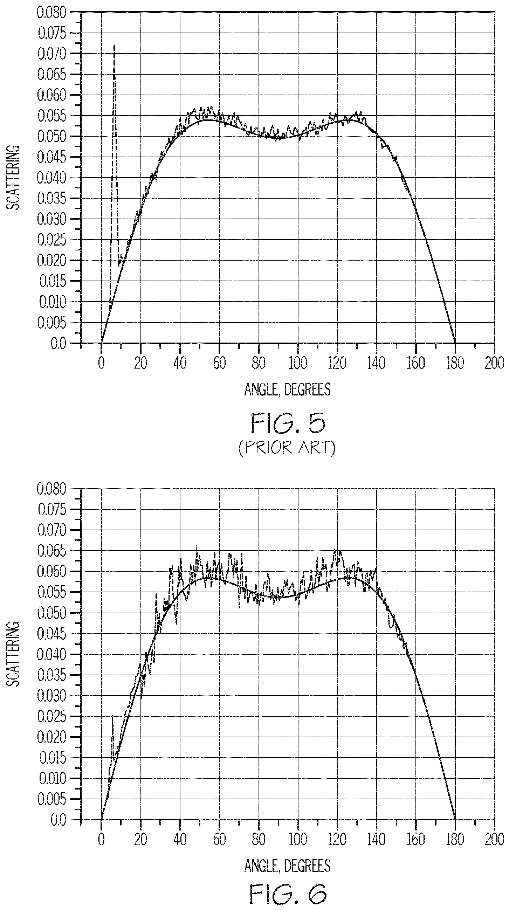

Measurements of Rayleigh scattering and SAS components can be performed using the light scattering measurement device described in P. Mazumder, S. Logunov, S. Ragahavan "Analysis of excess scattering in optical fibers", Appl.Optics, 96, 4042 (2004). In the light scattering measurement device, the total angular distribution of the light is measured in the plane of light propagation in the optical fiber. The azimuthal symmetry is assumed to be uniform. The unpolarized light from 1550 nm light source is injected into the optical fiber under test, and the angular distribution at 0-180 degrees is measured. While Rayleigh scattering follows to $(1+\cos^2(\theta))$ angular distribution (1 for vertically polarized light and $\cos^2(\theta)$ for perpendicular polarized to the plane of the detection), any deviation from this distribution is attributed to SAS. The measurements of Rayleigh scattering and SAS can be graphically depicted in a light scattering diagram, such as those in FIGS. 5-9. The scattering diagram analysis may illustrate the magnitude and period of the fluctuations which lead to the SAS contributions. The area under the curve $(1+\cos^2(\theta))$ fit at high angle > 40 degrees gives the contribution of Rayleigh scattering, and any additional scatter in the light scattering diagram, as seen in Figures 5-9, can be a attributed to SAS. The total area under the scattering distribution function is a loss. The percentage of the SAS for Rayleigh scattering provides information about each component contribution.

As used herein, the term "uniform angular scattering" refers to the fixed scattering part of the total fiber attenuation. The uniform angular scattering may be the sum of Rayleigh scattering, Raman scattering, and Brilluoin scattering.

Total attenuation of the optical fibers can be determined using an Optical Time Domain Reflectometer (OTDR) according to standard test methods.

The terms "microns" and "$\mu$m" are used interchangeably herein. The terms "nanometers" and "nm" are used interchangeably herein.

Referring to FIG. 1, the optical fiber 100 generally includes a core portion 102 and a cladding portion 103 surrounding the core portion 102. In one or more embodiments, the cladding portion 103 may directly contact the core portion 102. In the embodiments described herein, the various portions of the optical fiber 100 (i.e., the core portion 102 and the cladding portion 103) are formed from glass, such as silica-based glass, which may be doped with one or more dopants to achieve the desired optical properties. The structure and composition of the optical fibers 100 as well as the properties of the optical fibers 100 will be described in further detail herein.

Referring to FIGS. 1 and 2, a radial cross section of one embodiment of an optical fiber 100 (FIG. 1) and the corresponding relative refractive index $\Delta_C$ profile (FIG. 2) of the optical fiber 100 are depicted. The relative refractive index $\Delta_C$ of the optical fiber 100 is plotted in FIG. 2 as a function of the radius R from the center (axial centerline $C_L$) of the optical fiber 100. The optical fiber 100 generally may include the core portion 102 and the cladding portion 103. The core portion 102 may be positioned within the cladding portion 103 and may have a maximum relative refractive index $\Delta_{Cmax}$ (i.e., a maximum refractive index relative to the maximum refractive index for a pure silica core with no dopants). The core portion 102 and the cladding portion 103 may be concentric such that the cross-section of the optical fiber 100 may be generally circular symmetric with respect to the centerline $C_L$ of the core portion 102. The outer cladding 103 may be in direct contact with the core portion 102. The cladding portion 103 may have a relative refractive index $\Delta_{OC}$ (relative to pure silica glass). The $\Delta_{Cmax}$ of the core portion 102 may be greater than $\Delta_{OC}$ of the cladding portion 103.

In one or more embodiments described herein, the core portion 102 and the outer cladding 103 may be silica-based glass compositions.

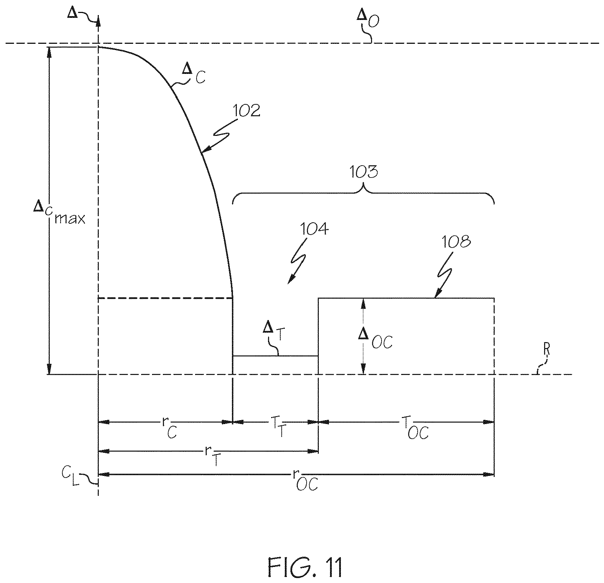

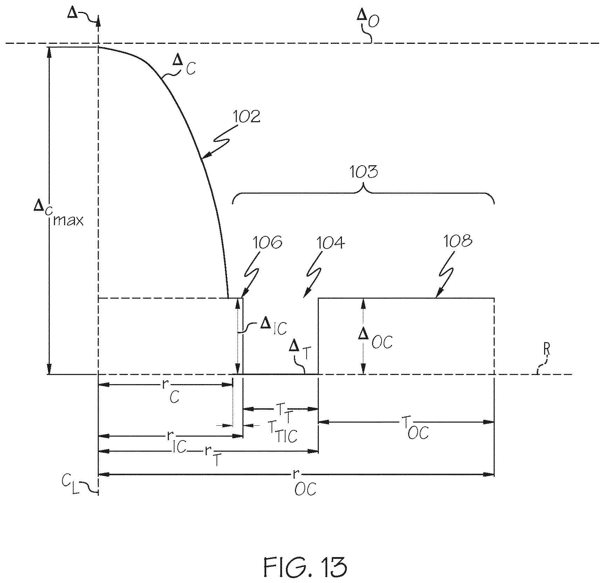

While FIGS. 1 and 2 depict only a core portion 102 and a cladding portion 103 with a single layer, it should be understood that, in one or more embodiments, the cladding portion 103 may further include a low-index trench 104 and an outer cladding 108, as will be described in further detail herein in relation to FIGS. 10 and 11. In one or more embodiments, the cladding portion 103 may include an the low index trench 104, an inner cladding 106, and the outer cladding 108, as will be described in further detail herein in relation to FIGS. 12 and 13. In embodiments where the optical fiber 100 does not include a low-index trench 104 or an inner cladding 106, the cladding portion 103 may be referred to as the outer cladding 108.

Still referring to FIGS. 1 and 2, the core portion 102 may have a radius $r_C$ and the cladding portion 103 may have an outer radius $r_{OC}$. The radius $r_C$ of the core portion 102 may be defined as the point at which the line tangent to the maximum slope of the relative refractive index profile (i.e., FIG. 2) of the core portion 102 crosses the zero delta line ($\Delta_0$). The radius $r_C$ of the core portion 102 may be greater than or equal to 3 microns and less than or equal to 15 microns. In one or more embodiments, the radius $r_C$ of the core portion 102 may be greater than or equal to 4 microns and less than or equal to 12 microns.

The cladding portion 103 may extend from the radius $r_C$ to the radius $r_{OC}$ such that the outer cladding 103 has a radial thickness $T_{OC} = r_{OC}-r_C$. The cladding 103 may surround the core portion 102. Accordingly, the glass portion of the optical fiber 100, (i.e., the core portion 102 and the cladding portion 103) may have a diameter of $2r_{OC}$. In one or more embodiments, the radius $r_{OC}$ of the glass portion of the optical fiber may be less than or equal to 62.5 microns. In one or more embodiments, the radius $r_{OC}$ of the glass portion of the optical fiber may be greater than or equal to 12 microns and less than or equal to 62.5 microns.

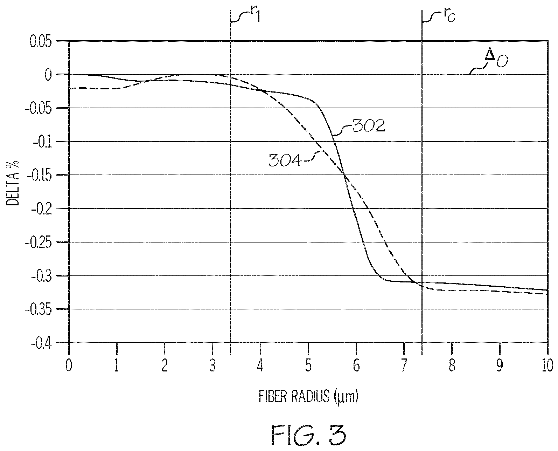

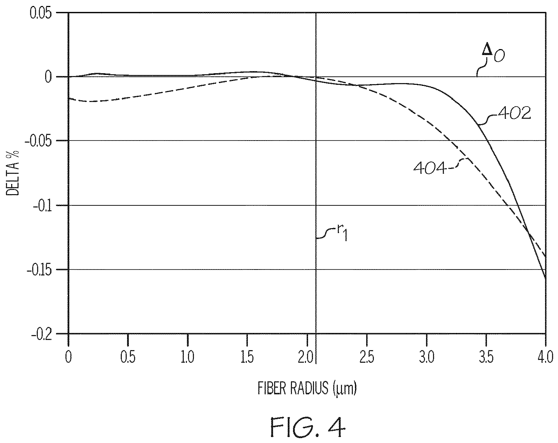

Optical fibers of the prior art generally include cores in which the composition of the glass is uniform throughout the cross-section of the optical fiber. Because of this constant composition throughout the core, the optical fibers of the prior art exhibit a sharp transition in the relative refractive index $\Delta_C$ profile proximate the outer radius $r_C$ of the core. Referring to FIG. 3, a measured relative refractive index profile for an optical fiber having a constant composition in the core (ref. no. 302) is graphically depicted. As shown in FIG. 3, the measured relative refractive index profile 302 for the optical fiber of the prior art shows a sharp index transition. Referring to FIG. 4, the measured relative refractive index profile 402 for another optical fiber of the prior art as a function of radius R is graphically depicted. In FIG. 4, the measured relative refractive index profile 402 for the optical fiber of the prior art also exhibits a sharp transition proximate the outer radius $r_C$ of the core portion. The relative refractive index profile 302 of the optical fibers of the prior art having cores with uniform composition profiles may have alpha values of greater than 10, such as greater than 15, or even greater than 20.

This sharp transition in the relative refractive index profile of the optical fibers of the prior art may be disposed in the high-power carrying region of the core of the optical fiber. The high-power carrying region of an optical fiber may be in a range of from 4-8 microns. Characteristics of the optical fiber in the high-power carrying region of the core may have the greatest influence on the performance of the optical fiber relative to the other portions of the core. The sharp transition in the relative refractive index profile in the high-power carrying region of the optical fibers of the prior art can result in substantial small angle scattering (SAS) and microbend losses from the optical fibers of the prior art. The variation of the index and profile in the longitudinal direction can cause light scattering at low angles. This is different from Rayleigh scattering, which scatters on features much less than the wavelength of the incident light. If variations of the profile are comparable to the wavelength of the incident light, this can lead to scattering having low angle components. During the draw process of drawing the fiber preform into the optical fiber, the sharp change in viscosity associated with the sharp transition in the relative refractive index profile can lead to core/clad interface instability during the draw process.

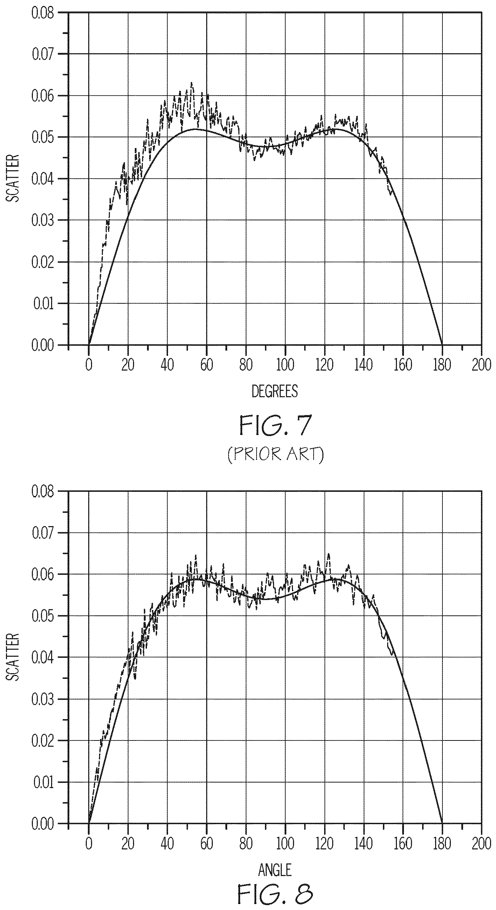

Referring to FIG. 5, measured light scattering (y-axis) as a function of incident angle (x-axis) for the optical fiber of the prior art (e.g., represented by ref. no. 302 in FIG. 3) having a core with a uniform composition and a sharp transition in the relative refractive index profile is graphically depicted. As shown in FIG. 5, the optical fiber of the prior art having a core with uniform composition exhibits a substantial peak in light scattering at incident angles of from 0 degrees to 10 degrees. The small angle scattering for the optical fiber of the prior art measured in FIG. 5 for 1550 nm wavelength was 3.1 % of the total scattering of the optical fiber at 1550 nm wavelength. Referring to FIG. 7, measured light scattering (y-axis) as a function of incident angle (x-axis) for the optical fiber of the prior art in FIG. 4 (ref. 402) having a core with a uniform composition and a sharp transition in the relative refractive index profile is graphically depicted. As shown in FIG. 7, the optical fiber of the prior art having a core with uniform composition (e.g., represented by ref. no. 402 in FIG. 4) exhibits substantial light scattering at incident angles of from 0 degrees to 80 degrees. The small angle scattering for the optical fiber of the prior art measured in FIG. 7 at 1550 nm wavelength was 7% of the uniform angular scattering of the optical fiber at 1550 nm wavelength.

Small angle scattering can be a significant contributor to signal attenuation in the optical fiber. The sharp transition in the relative refractive index profile of the optical fibers of the prior art can also increase microbending losses, which may refer to attenuation of the optical signal that occurs when the optical fiber passes through a curve, such as

EP 3 809 173 A1

through a bend in a conduit containing the optical fibers or wiring of a device requiring sharp bends in the optical fibers. Bending of the optical fibers may cause a shift in the incident angles of the signal in the optical fibers towards smaller angles. Optical fibers in present day telecommunications systems are required to transmit signals over long distances without substantial degradation of the signal over the distance. The small angle scattering and microbending losses of the optical fibers of the prior art having uniform compositions in the core can make a substantial contribution to signal attenuation in the optical fibers, thus, increasing the risk of signal degradation over long distances.

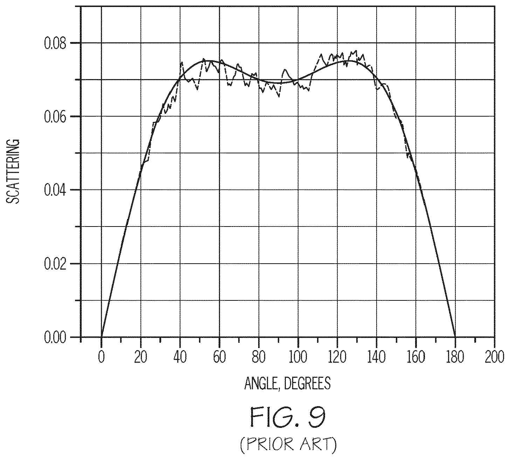

Small angle scattering can be reduced by introducing germanium oxide ($GeO_2$) as an up-dopant in the preform core of the preform from which the optical fiber is drawn. However, including $GeO_2$ in the core portion may result in an increase in Rayleigh scattering compared to silica-based core portions. FIG. 9 provides the measured light scattering for an optical fiber of the prior art having a core doped with $GeO_2$. The increase in Rayleigh scattering resulting from the presence of the $GeO_2$ may result in a greater signal attenuation of the optical fiber that more than offsets any benefits resulting from a reduction in small angle scattering. Therefore, there is an ongoing need for optical fibers having reduced small angle scattering without increasing Rayleigh scattering and overall signal attenuation of the fiber.

Referring again to FIGS. 1 and 2, the present disclosure is directed to optical fibers 100 having a more gradual transition in the relative refractive index profile $\Delta_C$ of the core portions 102. The graded relative refractive index profile $\Delta_C$ of the core portion 102 of the optical fibers 100 of the present disclosure may be accomplished by forming a graded concentration of one or more dopants in the core portion 102 of the optical fiber 100. In one or more embodiments, the core portion 102 of the optical fiber 100 may include a down-dopant having a graded concentration that decreases from the outer radius $r_C$ of the core portion 102 inward towards the center of the core portion 102 (e.g., towards the centerline $C_L$ of the core portion 102 in FIG. 1). Alternatively or additionally, in one or more embodiments, the core portion 102 of the optical fiber 100 may include an up-dopant having a graded concentration starting at a lesser concentration at the outer radius $r_C$ of the core portion 102 and increasing towards the center of the core portion 102. The graded concentration of the one or more dopants in the core portion 102 may produce a graded relative refractive index profile $\Delta_C$ having an alpha value ($\alpha$ from EQU. 2) less than the alpha value of the relative refractive index of a similarly sized optical fiber of the prior art having a constant composition in the core. The core portions 102 of the optical fibers of the present disclosure may have relative refractive index $\Delta_C$ profiles having alpha values of from 1 to 8.

Referring again to FIG. 3, the measured relative refractive index $\Delta_C$ profile 304 for the core portion 102 of one embodiment of the optical fiber 100 having a graded composition profile as a function of fiber radius R is graphically depicted. Compared to the relative refractive index profile 302 for the optical fiber of the prior art, the relative refractive index $\Delta_C$ profile 304 of the fiber 100 having a graded concentration profile in the core portion 102 may have a more gradual transition in the relative refractive index profile as shown by the reduced slope of the curve 304. For the core portion having a graded composition (ref. 304) the transition in the relative refractive index profile is spread out from radius $r_1$ to radius $r_C$. In contrast, the transition in the relative refractive index profile for the optical fiber of the prior art (ref. 302) occurred over a much smaller radial distance. The graded relative refractive index $\Delta_C$ profile produced by the graded composition in the core portion 102 of the optical fibers 100 disclosed herein may reduce the small angle scattering and microbend losses of the optical fiber 100. Reducing the small angle scattering and microbend losses of the optical fiber 100 may reduce the overall signal attenuation of the optical fiber 100. This may enable the optical fibers 100 disclosed herein to be used to transmit signals over long distances and/or in applications requiring the optical fibers 100 to follow a circuitous path.

Referring again to FIG. 1, the core portion 102 of the optical fibers 100 disclosed herein may include a silica-based glass and one or more dopants. In one or more embodiments, the core portion 102 may be a silica-based glass with one or more up-dopants having a constant concentration from the center of the core portion 102 to the outer radius $r_C$ of the core portion 102. Up-dopants may include, but are not limited to $GeO_2$, $Al_2O_3$, $P_2O_5$, $TiO_2$, Cl, or combinations of these. In one or more embodiments, the core portion 102 may include chlorine as the up-dopant. In one or more embodiments, the core portion 102 may be substantially free of up-dopants. In one or more embodiments, the core portion 102 may be substantially free of $GeO_2$.

The core portion 102 may include a down-dopant having a graded concentration that starts at a greatest concentration at the outer radius $r_C$ of the core portion 102 and decreases with decreasing radius R toward the center of the core portion 102. The down-dopant may include fluorine (F), boron (B), other down-dopants or combinations of these. In one or more embodiments, the down-dopant may be fluorine.

The concentration gradient of the down-dopant in the core portion 102 may have a maximum down-dopant concentration proximate the outer radius $r_C$ of the core portion 102. The concentration gradient of the down-dopant in the core portion 102 may have a minimum down-dopant concentration at the center of the core portion 102, such as at the centerline $C_L$ of the core portion 102. The concentration of the down-dopant may decrease with decreasing radius R. In one or more embodiments, the concentration of the down-dopant may decrease continuously from the outer radius $r_C$ to the center of the core portion 102. In one or more embodiments, the concentration of the down-dopant may decrease with decreasing radius and then level off to a constant concentration of down-dopant in a center region of the core portion 102. For example, referring again to FIG. 3, for the optical fiber 100 for which the relative refractive index profile 304 was determined, the concentration of down-dopant may be generally constant from the center of the core portion 102 to radius $r_1$. From radius $r_1$ to radius $r_C$ in FIG. 3, the concentration of the down-dopant may increase with increasing radius **R** to the maximum concentration of down-dopant at the outer radius $r_C$ of the core portion 102. The radius at which the concentration of down-dopant begins to increase with increasing radius **R** may be greater than or equal to 0 microns and less than the outer radius $r_C$ of the core portion 102.

As an alternative to having a graded concentration of down-dopant, the core portion 102 may have a graded concentration of an up-dopant. In one or more embodiments, the core portion 102 may include an up-dopant having a graded concentration that starts at a greatest concentration at the center of the core portion 102 and decreases with increasing fiber radius **R** toward the outer radius $r_C$ of the core portion 102. The up-dopant may include any of the up-dopants previously discussed herein, such as but not limited to $GeO_2$, $Al_2O_3$, $P_2O_5$, $TiO_2$, Cl, or combinations of these. In one or more embodiments, the up-dopant may be chlorine. The core portion 102 having a graded concentration profile of an up-dopant may also include a down-down-dopant, such as but not limited to fluorine, having a generally uniform concentration across the core portion 102. In these embodiments, the graded relative refractive index profile may be provided by the gradient in the concentration profile of the up-dopant.

The concentration gradient of the up-dopant in the core portion 102 may have a maximum up-dopant concentration proximate the center of the core portion 102 such as at the centerline $C_L$ of the core portion 102. The concentration gradient profile of the up-dopant in the core portion 102 may have a minimum up-dopant concentration proximate the outer radius $r_C$ of the core portion 102. The concentration of the up-dopant may decrease with increasing radius **R.** In one or more embodiments, the concentration of the up-dopant may decrease continuously from the center to the outer radius $r_C$ of the core portion 102. In one or more embodiments, the concentration of the up-dopant may be uniform proximate the center of the core portion 102 and may begin to decrease with increasing radius at a radial distance from the center. The radius at which the concentration of up-dopant begins to decrease with increasing radius **R** may be greater than or equal to 0 microns and less than the outer radius $r_C$ of the core portion 102.

The graded concentration of up-dopant or down-dopant in the core portion 102 may produce the graded relative refractive index $\Delta_C$ profile in the core portion 102. The graded relative refractive index $\Delta_C$ profile of the core portion 102 of the optical fiber 100 may have an alpha ($\alpha$, EQU. 2) that is greater than or equal to 1, greater than or equal to 1.25, or greater than or equal to 1.5. The graded relative refractive index $\Delta_C$ profile of the core portion 102 of the optical fiber 100 may have an alpha less than or equal to 8, less than or equal to 7, less than or equal to 6, less than or equal to 5, less than or equal to 4, or even less than or equal to 3. The graded relative refractive index $\Delta_C$ profile of the core portion 102 of the optical fiber 100 may have an alpha greater than or equal to 1 and less than or equal to 8, such as greater than or equal to 1.25 and less than or equal to 7, greater than or equal to 1.5 and less than or equal to 6, greater than or equal to 1 and less than or equal to 5.5, or even greater than or equal to 1 and less than or equal to 5.

Referring again to FIGS. 1 and 2, as previously discussed, the cladding portion 103 of the optical fiber 100 may be directly adjacent to and in direct contact with the core portion 102. An inner radius of the cladding portion 103 may be equal to the radius $r_C$ of the core portion 102. The cladding portion 103 may have a relative refractive index $\Delta_{OC}$ that is less than the maximum relative refractive index $\Delta_{Cmax}$ of the core portion 102. The cladding portion 103 may include one or more up-dopants or down-dopants to adjust the relative refractive index $\Delta_{OC}$ to satisfy the relationship $\Delta_{OC} < \Delta_{Cmax}$. The absolute difference between $\Delta_{Cmax}$ and $\Delta_{OC}$ (e.g., $\Delta_{Cmax} - \Delta_{OC}$) may be less than or equal to 0.1%, less than or equal to 0.06%, or even less than or equal to 0.04%, where percent refers to the units of $\Delta$. Up-dopants and/or down-dopants may also be included in the cladding portion 102 to modify the glass viscosity of the cladding portion 103 relative to the core portion 102 or between different parts of the cladding portion 103 to reduce stress between portions during down drawing of the optical fiber 100 from the preform. In one or more embodiments, the cladding portion 103 may include a down-dopant that may be the same as or different from the down-dopant in the core portion. In one or more embodiments, the down-dopant in the cladding portion may be fluorine. In one or more embodiments, the cladding portion 103 may include $TiO_2$. The concentration of the down-dopant, up-dopant, or other dopant in the cladding portion 103 may be generally uniform throughout the thickness $T_{OC}$ of the cladding portion 103 or may vary slightly through the thickness $T_{OC}$ of the cladding portion 103.

Referring to FIGS. 10 and 11, a radial cross section (FIG. 10) and relative refractive index profile (FIG. 11) of another embodiment of an optical fiber 100 is schematically depicted. The optical fiber 100 may include the core portion 102 and the cladding portion 103. The cladding portion may further include a low-index trench 104 and an outer cladding 108. The core portion 102 is positioned within the cladding portion 103 and may have the maximum relative refractive index $\Delta_{Cmax}$ (relative to pure (i.e., un-doped) silica glass). The core portion 102 and the cladding portion 103 are concentric such that the cross-section of the optical fiber 100 is generally circular symmetric with respect to the center of the core portion 102. The low-index trench 104 may surround and may be in direct contact with the core portion 102. The low-index trench 104 may have a relative refractive index $\Delta_T$ (relative to pure silica glass). The outer cladding 108 may surround and may be in direct contact with the outer surface of the low-index trench 104. The outer cladding 108 may have a relative refractive index $\Delta_{OC}$ (relative to pure silica glass). That is, the low-index trench 104 and the outer cladding 108 are arranged such that the low-index trench 104 is disposed between the core portion 102 and the outer cladding 108. The term "trench," as used herein, refers to a region of the optical fiber that is, in radial cross-section, surrounded by regions having relatively higher refractive indexes. That is, for the optical fiber 100 depicted in FIGS. 10 and 11, $\Delta_{\textbf{Cmax}} > \Delta_{\textbf{OC}} > \Delta_{\textbf{T}}$.

Still referring to FIGS. 10 and 11, the core portion 102 has a radius $r_C$. The low-index trench 104 may surround the core portion 102 and may extend from the radius $r_C$ to a radius $r_T$ such that the low-index trench 104 has a radial thickness $T_T = r_T\text{-}r_C$. The outer cladding 108 may surround the low-index trench 104 and may extend from the radius $r_T$ to a radius $r_{OC}$ such that the outer cladding has a radial thickness of $T_{OC} = r_{OC}\text{-}r_T$. Accordingly, the glass portion of the optical fiber 100 (e.g., the core portion 102, the low-index trench 104, and the outer cladding 108) may have a diameter of $2r_{OC}$.

In one or more embodiments described herein, the radius $r_{OC}$ of the glass portion of the optical fiber may be less than or equal to 62.5 microns. In one or more embodiments, the radius $r_{OC}$ of the glass portion of the optical fiber is greater than or equal to 40 microns and less than or equal to 62.5 microns. In one or more embodiments, the radius $r_C$ of the core portion 102 may be greater than or equal to 3 microns and less than or equal to 28 microns. In one or more embodiments, the radius $r_C$ of the core portion 102 may be greater than or equal to 4 microns and less than or equal to 15 microns, for example greater than or equal to 6 microns and less than or equal to 14.5 microns.

Core portion 102 of the optical fiber 100 of FIGS. 10 and 11 may have any of the compositions, features, or properties previously described herein for the core portion 102. In particular, the core portion 102 may have a graded concentration profile of one or more dopants, such as one or more of the up-dopants or down-dopants described herein. As previously discussed, the graded concentration profile of the one or more dopants may provide the core portion 102 with a graded relative refractive index $\Delta_{\textbf{Cmax}}$ profile that is sufficiently graded to reduce small angle scattering and microbend losses from the optical fiber 100.

Still referring to FIGS. 10 and 11, the low-index trench 104 may be directly adjacent to and in direct contact with the outer surface of the core portion 102. An inner radius of the low-index trench 104 may be equal to the radius $r_C$ of the core portion 102. The outer radius of the low-index trench 104 (i.e., the radius $r_T$ of the low-index trench 104) may be the radially outermost point at which the line tangent to the maximum slope of the relative refractive index profile (i.e., FIG. 11) of the low-index trench crosses the zero delta line ($\Delta_{\textbf{0}}$). In other words, the outer radius of the low-index trench 104 may correspond to the radially outermost point at which the relative refractive index profile of the optical fiber transitions in a step change from the relative refractive index profile $\Delta_{\textbf{T}}$ of the low-index trench 104 to the relative refractive index profile $\Delta_{\textbf{OC}}$ of the outer cladding 108. In one or more embodiments, the radius $r_T$ of the low-index trench 104 may be greater than or equal to 24 microns which may further improve the bend performance of the optical fiber 100. The radius $r_T$ may be greater than or equal to 26 microns and less than or equal to 40 microns, such as greater than or equal to 26 microns and less than or equal to 35 microns.

In one or more embodiments, the radial thickness $T_T$ of the low-index trench 104 may be greater than or equal to 1 micron and less than or equal to 20 microns. In some embodiments, the radial thickness $T_T$ of the low-index trench 104 may be greater than or equal to 2 microns and less than or equal to 10 microns. In some embodiments, the radial thickness $T_T$ of the low-index trench 104 may be greater than or equal to 2 microns and less than or equal to 8 microns or even greater than or equal to 2 microns and less than or equal to 7 microns.

As noted herein, the relative refractive index $\Delta_{\textbf{T}}$ of the low-index trench 104 may be less than the maximum relative refractive index $\Delta_{\textbf{Cmax}}$ of the core portion 102 and the relative refractive index $\Delta_{\textbf{OC}}$ of the outer cladding 108. The low-index trench 104 may include a silica-based glass. In one or more embodiments, the low-index trench 104 may include one or more dopants, such as one or more of the up-dopants, down-dopants, or both, previously described herein. In one or more embodiments, the core portion 102 may comprise silica and a down-dopant, and the low-index trench 104 may include a silica glass and down-dopant, where the concentration of down-dopant in the low-index trench 104 may be greater than the concentration of down-dopant in the core portion 102 and in the outer cladding 108 so that $\Delta_{Cmax} > \Delta_{OC} > \Delta_{T}$. In one or more embodiments, the relative refractive index $\Delta_{\textbf{T}}$ of the low-index trench 104 may be essentially flat. That is, the difference between the relative refractive index $\Delta_{\textbf{T}}$ at any two radii within the low-index trench 104 may be less than 0.1%, or even less than 0.05%. In other embodiments, the low-index trench 104 may have small fluctuations in the relative refractive index $\Delta_{\textbf{T}}$ as a result of small profile design or process variations.

Still referring to FIGS. 10 and 11, the outer cladding 108 may be directly adjacent to and in direct contact with the low-index trench 104. That is, an inner radius of the outer cladding 108 may be equal to the radius $r_T$ of the low-index trench 104, and the outer radius of the outer cladding 108 may be equal to the outer radius $r_{OC}$ of the cladding portion 103, as previously described herein.

Referring to FIG. 11, the outer cladding 108 of the optical fiber 100 may have a relative refractive index $\Delta_{\textbf{OC}}$ that is greater than the relative refractive index $\Delta_{\textbf{T}}$ of the low-index trench 104, thereby forming a region which is "up-doped" or "less down-doped" relative to the low-index trench 104. The outer cladding 108 may additionally include one or more dopants, such as but not limited to one or more of the up-dopants, down-dopants, or both previously described herein. In one or more embodiments, the concentration of the dopants in the outer cladding 108 may be constant or slightly decreasing through the radial thickness of the outer cladding 108 from the inner radius ($r_T$) to the outer radius ($r_{OC}$).

A difference between the relative refractive index $\Delta_{OC}$ of the outer cladding 108 and the relative refractive index $\Delta_T$ of the low-index trench 104 (i.e., $\Delta_{OC} - \Delta_T$) may be greater than or equal to 0.1 % and less than or equal to 1.0 %. In some embodiments, the difference between the relative refractive index $\Delta_{OC}$ of the outer cladding 108 and the relative refractive index $\Delta_T$ of the low-index trench 104 may be greater than or equal to 0.15 % and less than or equal to 0.8 %, such as greater than or equal to 0.2 % and less than or equal to 0.4 %, or even greater than or equal to 0.5 % and less than or equal to 0.7 %.

While FIGS. 10 and 11 depict the optical fiber 100 with a cladding portion 103 comprising the low-index trench 104 and the outer cladding 108 positioned around the core portion 102, it should be understood that the cladding portion 103 may further comprise an inner cladding disposed between the low-index trench 104 and the core portion 108. Referring now to FIGS. 12 and 13, the optical fiber 100 may include the core portion 102 and the cladding portion 103, as described hereinabove. Additionally, the cladding portion 103 may include an inner cladding 106 in combination with the low-index trench 104 and the outer cladding 108. The core portion 102, the low-index trench 104, and the outer cladding 108 may include any of the compositions, features, or characteristics previously described herein for these portions of the optical fiber 100. In particular, the core portion 102 may have a graded concentration profile of one or more dopants, such as one or more of the up-dopants or down-dopants described herein. As previously discussed, the graded concentration profile of the one or more dopants may provide the core portion 102 with a graded relative refractive index $\Delta_{Cmax}$ profile that is sufficiently graded to reduce small angle scattering and microbend losses from the optical fiber 100.

The inner cladding 106 may surround and may be in direct contact with the core portion 102. The inner cladding 106 may have a relative refractive index $\Delta_{IC}$ (relative to pure silica glass). The low-index trench 104 may surround and may be in direct contact with the inner cladding 106 and may have relative refractive index $\Delta_T$ (relative to pure silica glass). The outer cladding 108 may surround and may be in direct contact with the low-index trench 104 and may have relative refractive index $\Delta_{OC}$ (relative to pure silica glass). The inner cladding 106, the low-index trench 104, and the outer cladding 108 may be arranged such that the inner cladding 106 is disposed between the core portion 102 and the low-index trench 104, and the low-index trench 104 is disposed between the inner cladding 106 and the outer cladding 108. In embodiments of the optical fiber 100 represented by FIGS. 12 and 13, $\Delta_{Cmax} > \Delta_{IC}$; $\Delta_{Cmax} > \Delta_{OC}$; $\Delta_{IC} > \Delta_T$; $\Delta_{Cmax} > \Delta_{IC} > \Delta_T$; $\Delta_{Cmax} > \Delta_{OC} > \Delta_T$.

Referring again to FIGS. 12 and 13, the core portion 102 has radius $r_C$. The inner cladding 106 may surround the core portion 102 and may extend from the radius $r_C$ to a radius $r_{IC}$ such that the inner cladding 106 has a radial thickness $T_{IC} = r_{IC} - r_C$. The low-index trench 104 may surround the inner cladding 106 and may extend from the radius $r_{IC}$ to a radius $r_T$ such that the low-index trench 104 has radial thickness $T_T = r_T - r_{IC}$. The outer cladding 108 may surround the low-index trench 104 and may extend from the radius $r_T$ to a radius $r_{OC}$ such that the outer cladding 108 has a radial thickness of $T_{OC} = r_{OC} - r_T$. Accordingly, the glass portion of the optical fiber 100 (e.g., the core portion 102, inner cladding 106, low-index trench 104, and outer cladding 108) may have a diameter of $2r_{OC}$.

Referring to FIGS. 12 and 13, the inner radius of the inner cladding 106 may be equal to the outer radius $r_C$ of the core portion 102. The outer radius of the inner cladding 106 (i.e., the radius $r_{IC}$ of the inner cladding 1064) may be defined as the radially outermost point at which the the relative refractive index profile of the optical fiber transitions in a step change from the relative refractive index profile $\Delta_{IC}$ of the inner cladding 106 to relative refractive index profile $\Delta_T$ of the low-index trench 104. In one or more embodiments, the radial thickness $T_{IC}$ of the inner cladding 106 may be greater than or equal to 0.5 microns and less than or equal to 5 microns, such as greater than or equal to 1 micron and less than or equal to 4 microns, or even greater than or equal to 1 micron and less than or equal to 3 microns.

Referring to FIG. 13, the inner cladding 106 of the optical fiber 100 may have a relative refractive index $\Delta_{IC}$ which is greater than the relative refractive index $\Delta_T$ of the low-index trench 104, thereby forming a region which is "up-doped" or "less down-doped" relative to the low-index trench 104. The inner cladding 106 may be a silica-based glass and may additionally include one or more dopants, such as but not limited to one or more of the up-dopants, down-dopants, or both previously described herein. The up-dopants and/or down-dopants may be added to the silica-based glass of the inner cladding 106 to increase or decrease the relative refractive index $\Delta_{IC}$ relative to the maximum relative refractive index $\Delta_{Cmax}$ of the core portion 102, the relative refractive index $\Delta_T$ of the low-index trench 104, or both. In one or more embodiments, the concentration of the dopants in the inner cladding 106 may be constant or slightly decreasing through the radial thickness $T_{IC}$ of the inner cladding 104.

The optical fibers 100 produced by the processes disclosed herein and having a graded concentration of dopant and a graded relative refractive index $\Delta_C$ may exhibit a total attenuation at a wavelength of 1550 nm of less than or equal to 0.17 dB/km. In one or more embodiments, the optical fibers 10 produced by the processes disclosed herein may have a total attenuation at a wavelength of 1550 nm of less than or equal to 0.16 dB/km. The optical fibers 100 produced by the processes disclosed herein may have a small angle scattering that is less than 4% of the uniform angular scattering at 1550 nm wavelength for the optical fiber 100. The optical fibers 100 produced by the processes may have reduced microbend losses compared to optical fibers having uniform composition and a sharper transition in the relative refractive index profile. The optical fibers 100 may have microbend losses at 1550 nm wavelength of less than or equal to 0.2 dB/km for an effective area (Aeff) of greater than 120 $\mu m^2$. The optical fibers 100 may have microbend losses at 1550 nm wavelength of less than or equal to 0.1 dB/km for an effective area (Aeff) of from 100 $\mu m^2$ to 120 $\mu m^2$. The optical fibers 100 may have microbend losses at 1550 nm wavelength of less than or equal to 0.05 dB/km for an effective area (Aeff) of less than 100 $\mu m^2$.

The optical fiber 100 having the graded concentration of an up-dopant or down-dopant in the core portion 102 may be made by forming a porous preform, consolidating the porous preform to produce a consolidated preform, and drawing a fiber from the consolidated preform. The consolidated preform may include a core portion and a cladding portion, where the core portion of the consolidated preform may include a graded concentration of the up-dopant and/or down-dopant. The optical fiber 100 may be drawn from the consolidated preform according to known techniques, such as those disclosed in U.S. Patent No. 7,565,820, U.S. Patent No. 5,410,567, U.S. Patent No. 7,832,675, U.S. Patent No. 6,027,062.

The consolidated preform may be formed by producing a porous preform. By way of example and not intended to be limiting, the porous preform comprising silica (or doped silica) soot may be formed by outside vapor deposition (OVD). In the OVD method, the porous preform may be formed by depositing silica-containing soot onto the outer surface of a rotating and translating bait rod, which may be tapered. The silica-containing soot may be formed by providing a silica-containing glass/soot precursor in gaseous form to the flame of a burner. Fuel, such as methane ($CH_4$), and combustion supporting gas, such as oxygen or air, are provided to the burner and ignited to form the flame. The relative flow rates of fuel gas, combustion supporting gas, and silica-containing glass/soot precursor to the burner may be controlled using a plurality of mass flow controllers. Soot from oxidation of the silica-containing glass/soot precursor may deposit on the bait rod and buildup in microlayers to form a generally cylindrically-shaped soot region, which may correspond to the porous preform core of a porous preform.

The porous preform core may be doped with an up-dopant or down-dopant to produce a graded concentration profile of the up-dopant or down-dopant in the porous preform core. The porous preform core may be sintered or consolidated in a furnace to form the consolidated preform core. Prior to sintering or consolidation, the bait rod may be removed to form a hollow, cylindrical porous preform core. During the sintering or consolidation process, the porous preform core may be suspended, for example, inside a pure quartz muffle tube of the furnace by a holding mechanism. Sintering or consolidation may cause the porous preform core to transition to a closed pore state.

Prior to sintering or consolidation of the porous preform core to produce the consolidated preform core, the porous preform core may be doped with the up-dopant or down-dopant to ultimately produce the graded concentration profile of the up-dopant or down-dopant in the preform core. The up-dopant or down-dopant may be doped into the porous preform core by any of a number of methods. In one or more embodiments, the graded concentration of up-dopant or down-dopant in the porous preform core may be produced using the OVD method. In other words, the graded concentration profile of up-dopant or down-dopant may be formed during laydown (formation of the porous preform core) by introducing an up-dopant precursor, such as but not limited to silicon tetrachloride, or a down-dopant precursor, such as silicon tetrafluoride, during the OVE process. A flow rate of the up-dopant and/or down-dopant precursor to the burner may be modified to increase or decrease an amount of up-dopant or down-dopant deposited at a given radius of the porous preform core.

A graded concentration profile of down-dopant may be produced by conducting a high-temperature doping process during consolidation by introducing a down-dopant precursor to the furnace in which the porous preform core is being consolidated. The concentration profile of the dopant may be modified by changing the duration, temperature, or concentration of down-dopant precursor in the furnace for the high-temperature doping process.

The graded concentration profile of up-dopant or down-dopant may also be formed through deposition of successive, non- porous glass layers of varying composition via plasma chemical vapor deposition (PCVD)of the down-dopant into the surface of the porous preform core prior to sintering or consolidation of the porous preform core. In one or more embodiments, a graded concentration profile of an up-dopant may be formed by doping the porous preform core with a uniform concentration profile of the up-dopant during laydown and then exposing the porous preform core to an oxidizing atmosphere at an elevated temperature, where the oxidizing atmosphere may react with the up-dopant, such as chlorine, at the surface of the porous preform core to remove the up-dopant at the surface, thereby producing a graded concentration profile of the up-dopant in the porous preform core. Other methods may also be used to produce the graded concentration profile of the up-dopant or down-dopant in the consolidated preform core. Once the porous preform core is sintered or consolidated, no further doping with up-dopant or down-dopant is possible due to the closed pore state of the consolidated preform core following sintering/consolidation.

The sintering temperatures during consolidation may refer to the temperature of one or more furnaces sufficient to cause the porous preform to transition to a closed pore state and densify. The sintering temperatures during sintering/consolidation may be from 1100 °C to 1600 °C, from 1200 °C to 1550 °C, or even from 1250 °C and 1500 °C. After sintering, the preform core may be drawn to a smaller diameter and cut into lengths to form preform core canes.

The consolidated preform core may be used as a glass core or glass core cane in optical fiber manufacturing. Additional microlayers of silica-based soot may be deposited on the consolidated preform core to form one or more of the inner cladding, the low-index trench, the outer cladding or combinations of these. The inner cladding, low-index trench, outer cladding, or combinations of these may then be deposited onto the preform core or preform core cane using the same methods as explained above with respect to forming the preform core. The inner cladding soot can then be doped with fluorine using a dopant gas having fluorine or other optical fiber dopants therein. For example, $SiF_4$ and/or $CF_4$ gas may be employed. Such dopant gases may be employed using conventional doping temperatures, for example between about 950 °C and 1600 °C.

The fibers disclosed herein may be drawn from optical fiber preforms made using conventional manufacturing techniques and using known fiber draw methods and apparatus, for example as is disclosed in U.S. Pat. Nos. 7,565,820, 5,410,567, 7,832,675, 6,027,062. In particular, optical fiber is pulled from a root portion of the optical fiber preform by a tractor. After leaving a draw furnace, the bare optical fiber encounters a diameter monitor (D) which provides a signal that is used in a feedback control loop to regulate speed of the tractor to maintain a constant fiber diameter. The bare optical fiber then passes through a fiber tension measurement device (T) that measures the tension of the optical fiber caused by pulling the fiber from the preform. This tension can increase depending on the speed of the fiber draw, the temperature and viscosity of the root of the preform, etc. One example of a fiber tension measurement device is disclosed in EP 0479120 A2, which is hereby incorporated herein by reference.

The up-dopant removal process during consolidation may produce a core portion 102 having a graded concentration of up-dopant, such as chlorine. The graded concentration of the up-dopant in the core portion 102 may have a greatest concentration in the center of the core portion 102 and may gradually decrease with increasing radius proximate the outer radius $r_C$ of the core portion. The up-dopant removal process may include subjecting the porous preform core to the oxygen-containing atmosphere for multiple discrete periods during the consolidation process. Additionally, the concentration of oxygen in the oxygen-containing atmosphere may be different in different heating zones during the up-dopant removal process to further shape the relative refractive index profile $\Delta_C$.

*EXAMPLES*

The embodiments described herein will be further clarified by the following examples.

COMPARATIVE EXAMPLES 1 AND 2

Two optical fibers of the prior art were prepared with substantially pure silica core portions, a low-index trench, and an outer cladding. The core portions of Comparative Examples 1 and 2 were pure silica core portions with a constant composition and no dopants. The outer radius $r_C$ of the core portions for Comparative Examples 1 and 2 were different, with the $r_C$ of Comparative Example 2 greater than the $r_C$ of Comparative Example 1.

The relative refractive index profiles $\Delta_C$ for the core portions of the optical fibers of Comparative Examples 1 and 2 were measured. The measured relative refractive index profile for the core portion of the optical fiber of Comparative Example 1 is graphically depicted in FIG. 4 and is identified by reference number 402. As shown in FIG. 4, the relative refractive index 402 of the core portion decreases sharply starting at about 3 microns. The measured relative refractive index profile for the core portion of the optical fiber of Comparative Example 2 is graphically depicted in FIG. 3 and is identified by reference number 302. As shown in FIG. 3, the relative refractive index 302 decreases sharply starting at about 5.5 microns.

Measurements of Rayleigh scattering and SAS components were performed on the optical fibers of Comparative Examples 1 and 2 using the light scattering measurement device and method previously described herein. The light scattering diagrams for the optical fibers of Comparative Examples 1 and 2 are provided in FIGS. 7 and 5, respectively. For the smaller optical fiber of Comparative Example 1 (FIG. 7), the light scattering diagram shows substantial small angle scattering at angles less than 90 degrees. For the optical fiber of Comparative Example 1, the contribution of small angle scattering at a wavelength of 1550 nm was 7% of the uniform angular scattering of the optical fiber at 1550 nm wavelength. For the larger optical fiber of Comparative Example 2 (FIG. 5), the light scattering diagram shows a substantial peak in the scattering at an angle of from 0 (zero) to 10 degrees. From FIG. 5, the contribution of small angle scattering for Comparative Example 2 was determined at a wavelength of 1550 nm to be 3.1% of the uniform angular scattering of the optical fiber at 1550 nm wavelength.

EXAMPLES 3-5

Three optical fibers were prepared according to the methods disclosed herein so that the core portions of the optical fibers had a graded concentration of a down-dopant resulting in a graded relative refractive index profile $\Delta_C$. The core portion for Example 3 was the same size as the core portion of Comparative Example 1 and the core portion for Example 4 was the same size as the core portion of Comparative Example 2. The core portion for Example 5 was greater in cross-sectional area than the core portion of Example 4. The optical fibers of Examples 3-5 included a low-index trench and outer cladding that were the same as the low-index trench and outer cladding of the optical fibers of Comparative Examples 1 and 2.

The core portions of the optical fibers of Examples 3-5 were prepared from an optical fiber preform comprising a preform core having a graded concentration of fluorine down-dopant having a greatest concentration at outer radius of the preform core and decreasing with decreasing radius of the preform core. The preform cores for Examples 3-5 were subjected to low-temperature doping followed by higher temperature doping during sintering. The low-temperature doping and high temperature doping were conducted with different concentrations of silicon tetrafluoride as the down-dopant precursor. The porous preform was maintained in the high-temperature doping atmosphere during the consolidation process until the preform transitioned to a closed pore structure to produce the consolidated preform cores of Examples 3-5 having graded concentrations of the fluorine down-dopant having a greatest concentration at the outer surface of the consolidated preform core. Following consolidation, the low-index trench and outer cladding were formed according to methods known in the art, such as through sequential laydown and consolidation steps, to produce the preforms for Examples 3-5. The preforms were then drawn according to known methods to produce the optical fibers of Examples 3-5

Referring now to FIG. 4, the measured relative refractive index $\Delta_C$ profile of the core portion of the optical fiber of Example 3 is shown (reference number 404) in comparison to the measured relative refractive index $\Delta_C$ of the core portion for Comparative Example 1 (ref. no. 402). Compared to the $\Delta_C$ profile for the core portion of Comparative Example 1, the $\Delta_C$ profile for the core portion of Example 3 exhibits a much more gradual decrease in the $\Delta_C$, which is spread over a greater range of the radius. Thus, the core portion of the optical fiber of Example 3 having the graded concentration of down-dopant exhibits a more graded relative refractive index $\Delta_C$ profile compared to the core portion of Comparative Example 1 having a uniform composition. Referring to FIG. 3, the measured relative refractive index $\Delta_C$ profile of the core portion of the optical fiber of Example 4 is shown (reference number 304) in comparison to the measured relative refractive index $\Delta_C$ of the core portion for Comparative Example 2 (ref. no. 302). Compared to the $\Delta_C$ profile for the core portion of Comparative Example 2, the $\Delta_C$ profile for the core portion of Example 4 exhibits a much more gradual decrease in the $\Delta_C$, which is spread over a greater range of the radius. For Example 4, the $\Delta_C$ decreases gradually over a radial distance of 4 microns. In comparison, for the core portion of Comparative Example 2, the change in $\Delta_C$ occurs over a shorter radial distance of 1 micron or less. Thus, the core portion of the optical fiber of Example 4 having the graded concentration of down-dopant exhibits a graded relative refractive index $\Delta_C$ profile compared to the core portion of Comparative Example 2 having a uniform composition.

Measurements of Rayleigh scattering and SAS components were performed on the optical fibers of Examples 3 and 4 using the light scattering measurement device and method previously described herein. The IR attenuation of the optical fibers of Comparative Examples 1 and 2 and Examples 3-4 were also measured, and the total attenuation for a wavelength of 1550 nm for each optical fiber was calculated as the sum of the contributions from Rayleigh scattering, SAS, and IR. For comparison purposes, the signal attenuation for each optical fiber of Comparative Examples 1 and 2 and Examples 3-4 was measured using an OTDR. The determined values for the Rayleigh scattering, SAS, IR attenuation, total attenuation at 1550 nanometer wavelength, and measured attenuation for the optical fibers of Comparative Examples 1 and 2 and Examples 3-4 are provided below in Table 1.

**Table 1**

| Optical Fiber | Rayleigh (dB/km) | SAS (dB/km) | IR (dB/km) | Total Calculated Attenuation (dB/km) | Measured Attenuation (dB/km) |
|---|---|---|---|---|---|
| Comp. Ex. 1 | 0.132 | 0.0094 | 0.015 | 0.1564 | 0.1596 |
| Example 3 | 0.136 | 0.0050 | 0.015 | 0.1560 | 0.1566 |
| Comp. Ex. 2 | 0.130 | 0.0040 | 0.015 | 0.1490 | 0.1496 |
| Example 4 | 0.131 | 0.0035 | 0.015 | 0.1495 | 0.1491 |

As shown in Table 2, the graded relative refractive index $\Delta C$ profiles of the core portions of the optical fibers of Examples 3 and 4 show reduced SAS scattering compared to the optical fibers of Comparative Examples 1 and 2, respectively, which have uniform core compositions. Introducing the fluorine down-dopant may slightly increase the Rayleigh scattering of the optical fiber. However, when the total attenuation of the optical fibers are measured by OTDR, the optical fibers of Examples 3 and 4 show a decrease in overall signal attenuation compared to the optical fibers of Comparative Examples 1 and 2, respectively.

The light scattering diagrams for the optical fibers of Examples 3 and 4 are provided in FIGS. 8 and 6, respectively. Referring to FIG. 8, the light scattering for the optical fiber of Example 3 shows less deviation from the curve at angles of less than 40 degrees compared to the light scattering measured for the optical fiber of Comparative Example 1, which is provided in FIG. 7. For the optical fiber of Example 3, the contribution of small angle scattering at 1550 nm wavelength was only 3.7% of the uniform angular scattering of the optical fiber at 1550 nm wavelength, which is substantially less than the contribution of small angle scattering of 7% of the uniform angular scattering for the optical fiber of Comparative Example 1. Referring to FIG. 6, the light scattering for the optical fiber of Example 4 shows much smaller deviations from the curve at angles of less than 20 degrees compared to the light scattering measured for the optical fiber of Comparative Example 2, which is provided in FIG. 5. For the optical fiber of Example 4, the contribution of small angle scattering at 1550 nm wavelength was only 2.4% of the uniform angular scattering of the optical fiber at 1550 nm wavelength, which is less than the contribution of small angle scattering of 3.4% of the uniform angular scattering for the optical fiber of Comparative Example 2. The measured light scattering data, therefore, demonstrates that the graded relative refractive index $\Delta_C$ profile of the core portion of Examples 3-5 provided by the graded concentration in down-dopant in the core portion may reduce small angle scattering in the core portion, which may reduce microbend losses from the fiber.

Additionally, the optical properties of the optical fibers of Comparative Examples 1 and 2 and Examples 3 and 4 were measured according to the methods previously described herein. In particular the MFD at 1310 nm and 1550 nm (MFD1310 and MFD1550), the cable cutoff, the zero dispersion wavelength ($\lambda_0$) for chromatic dispersion, the chromatic dispersion at 1500 nm, the attenuation at 1310 nm (Atten1310), and the attenuation at 1550 nm (Atten1550) were measured for the optical fibers of Comparative Examples 1 and 2 and Examples 3 and 4. The results are provided below in Table 2.

**Table 2**

| Optical Fiber-> | Comp. Ex. 1 | Example 3 | Comp. Ex. 2 | Example 4 |
|---|---|---|---|---|
| MFD1310 | 9.13 | 9.25 | -- | -- |
| MFD1550 | 10.4 | 10.52 | 12.05 | 11.9 |
| Cable Cutoff (nm) | 1218 | 1210 | 1471 | 1444 |
| $\lambda_0$ (nm) | 1306.5 | 1305.6 | -- | -- |
| Chromatic Dispersion (1550 nm) | 16.55 | 16.79 | 20.26 | 20.22 |
| Atten1310 | 0.2793 | 0.2727 | -- | -- |
| Atten1550 | 0.1596 | 0.1566 | 0.1496 | 0.1491 |

As shown in Table 2, the optical fibers of Examples 3 and 4 exhibit reduced total signal attenuation at 1550 nm compared to the optical fibers of Comparative Examples 1 and 2, respectively.

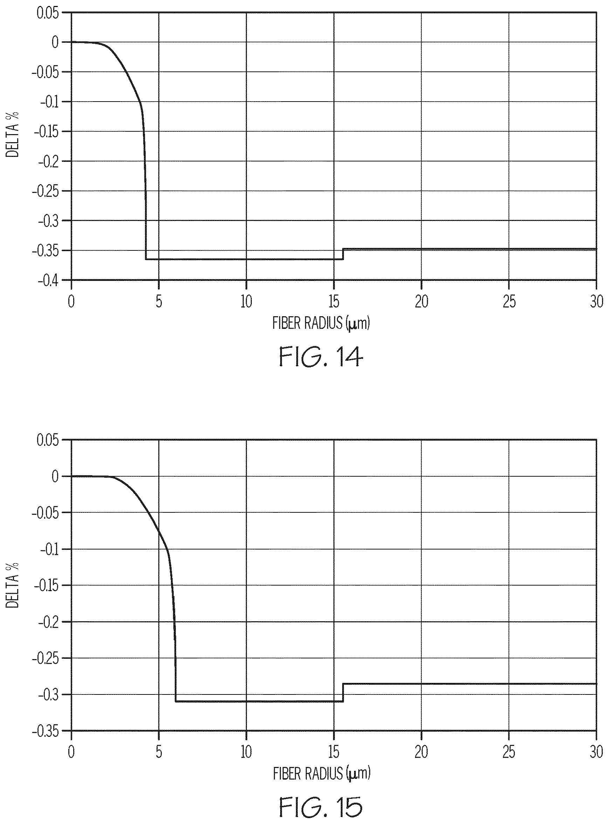

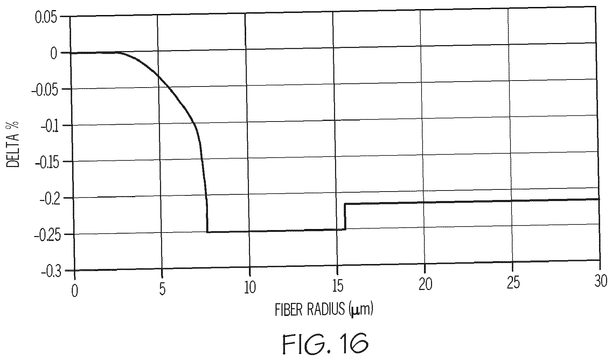

The relative refractive index $\Delta_C$ (y-axis) as a function of fiber radius (R) (x-axis) for the optical fibers for Examples 3-5 were modeled and the graphical models are provided in FIGS. 14-16, respectively. The optical properties of the optical fibers of Examples 3-5 were further modeled based on the methods previously described herein. In particular the MFD at 1310 nm and 1550 nm (MFD1310 and MFD1550), chromatic dispersion at 1310 nm and 1550 nm (Disp1310 and Disp1550), the zero dispersion wavelength ($\lambda_0$), dispersion slope at 1310 nm and 1550 nm (Slope1310 and Slope1550), the effective area at 1310 nm and 1550 nm ($A_{eff}$ 1310 and $A_{eff}$ 1550), the cable cutoff, the microbend performance based on the pin array test (Pin Array 1550), the mircobend performance based on the lateral load test (LatLoad 1550), the microbend performance based on the drum test (Microbend 1550), and the attenuation at 1550 nm (Atten1550) were modeled for the optical fibers of Examples 3-5. The results of the modeling are provided below in Table 3.

**Table 3**

| | Ex. 3 | Ex. 4 | Ex. 5 |
|---|---|---|---|
| MFD1310 | 9.150 | 10.725 | 12.638 |
| Dispersion1310 | -0.033 | 2.965 | 3.523 |
| Slope1310 | 0.084 | 0.088 | 0.090 |
| $\lambda_0$ | 1310.4 | 1276.4 | 1270.9 |
| MFD 1550 | 10.557 | 11.921 | 13.902 |
| Dispersion1550 | 16.463 | 20.227 | 21.230 |
| Slope1550 | 0.058 | 0.060 | 0.062 |

(continued)

|  | Ex. 3 | Ex. 4 | Ex. 5 |
|---|---|---|---|
| Aeff 1310 | 64.20 | 91.20 | 127.63 |
| Aeff 1550 | 83.59 | 110.11 | 151.42 |
| Cable Cutoff | 1200 | 1426 | 1478 |
| Pin Array 1550 | 23.129 | 13.686 | 44.027 |
| Lat Load 1550 | 1.003 | 1.802 | 39.280 |
| Microbend1550 (dB/km) | 0.195 | 0.305 | 0.747 |
| Atten1550 (dB/km) | 0.161 | 0.152 | 0.158 |

COMPARATIVE EXAMPLE 6

In Comparative Example 6, an optical fiber was prepared to have a core portion comprising a silica-based glass lightly doped with a down-dopant to produce a uniform concentration of the down-dopant fluorine throughout the core portion. The uniform concentration of down-dopant was produced by subjecting the porous preform core to a low-temperature doping step. During the low-temperature doping process, the porous preform core was subjected to a low-temperature doping atmosphere of silicon tetrafluoride as the down-dopant precursor. Low-temperature doping process resulted in a porous preform core lightly doped with fluorine and having a generally uniform concentration of fluorine throughout. The porous preform core was then sintered to produce the consolidated preform core for Comparative Example 6.

EXAMPLES 7-12

Examples 7-12 illustrate variations of the relative refractive index $\Delta_C$ profile. The porous preform cores for Examples 7-12 were the same as those used in Comparative Example 6, and were subjected to the low-temperature doping process previously described in Comparative Example 6. A low-temperature doping followed by a higher temperature doping during sinter with different concentrations of silicon tetrafluoride as the down-dopant precursor during the consolidation process until the preform transitioned to a closed pore structure to produce the consolidated preform cores. The consolidated preform cores of Examples 7-12 were drawn and cut into canes.

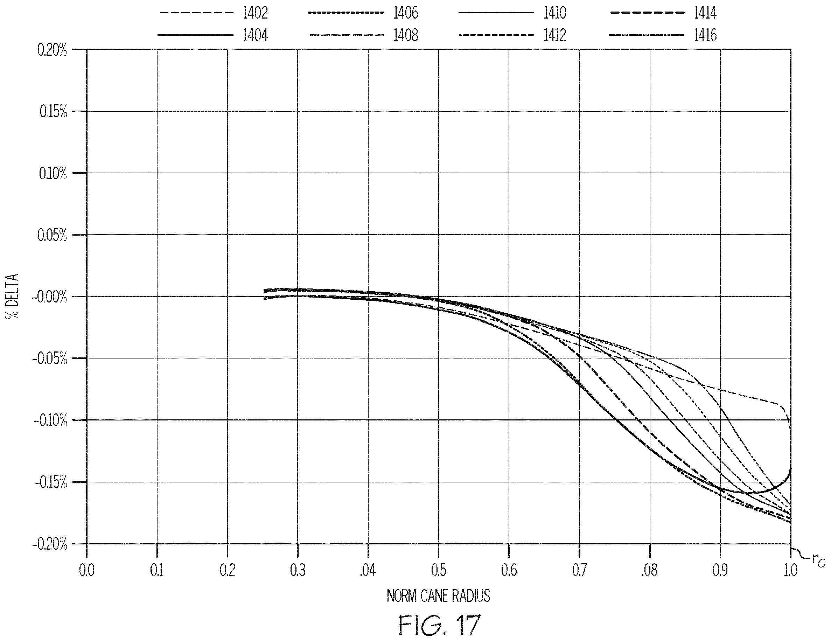

The relative refractive index $\Delta C$ profiles (y-axis) as a function of normalized radius (x-axis) for the preform cores of Comparative Example 6 and Examples 7-12 were measured and the results are graphically presented in FIG. 17. The following Table 4 provides the reference numbers in FIG. 17 corresponding to the relative refractive index $\Delta C$ profiles for each of the optical fibers of Comparative Example 6 and Examples 7-12.

Table 4

| Optical Fiber | Ref. No. in FIG. 17 |
|---|---|
| Comp. Ex. 6 | 1402 |
| Example 7 | 1404 |
| Example 8 | 1406 |
| Example 9 | 1408 |
| Example 10 | 1410 |
| Example 11 | 1412 |
| Example 12 | 1414 |

Referring to FIG. 17, variations in the time, temperature and concentration of the doping process may cause the relative refractive index profile $\Delta_C$ of the preform core to become more or less graded. For example, the most graded $\Delta_C$ profile is for Examples 7 and 8 (ref. nos. 1404 and 1406, respectively). Changing doping temperatures as well as time and concentrations can be used to shape the relative refractive index $\Delta_C$ profile of the core portion. For the optical fiber of Comparative Example 6 (ref. 1402), the preform core exhibited a sharp transition of the $\Delta_C$ profile right at the outer radius of the preform core (normalized radius equal to 1).

It will be apparent to those skilled in the art that various modifications and variations can be made to the embodiments described herein without departing from the spirit and scope of the claimed subject matter. Thus, it is intended that the specification cover the modifications and variations of the various embodiments described herein provided such modification and variations come within the scope of the appended claims and their equivalents.

**Claims**

1. An optical fiber comprising:

   a core portion having a radius $r_C$ and a graded refractive index profile $\Delta_C$ having an alpha value greater than or equal to 1 and less than or equal to 8, the core portion comprising:

   a silica-based glass;
   a dopant; and
   a cladding portion surrounding the core portion and having a relative refractive index $\Delta_{OC}$, wherein $\Delta OC$ is less than a maximum refractive index $\Delta_{Cmax}$ of the core portion,

   wherein the dopant is a down dopant, a dopant having a propensity to lower the refractive index of glass relative to pure, un-doped $SiO_2$.
   wherein a concentration of the down-dopant is graded such that the concentration of the down-dopant decreases from the radius $r_C$ towards a center of the core portion,
   wherein the down-dopant comprises fluorine, boron, or a combination thereof.

2. The optical fiber of claim, wherein the core portion is substantially free of $GeO_2$.

3. The optical fiber according to claims 1 or 2, wherein the difference between $\Delta_{Cmax}$ and $\Delta_{OC}$ is less than or equal to 0.1%, less than or equal to 0.06%, or even less than or equal to 0.04%, where percent refers to the units of $\Delta$.

4. The optical fiber of any of the preceding claims, wherein the optical fiber has a total attenuation at a wavelength of 1550 nm of less than or equal to 0.17 decibels per kilometer (dB/km).

5. The optical fiber of any of the preceding claims, wherein a small angle scattering of the optical fiber at 1550 nm wavelength is less than 4% of the uniform angular scattering at 1550 nm wavelength for the optical fiber 100.

6. The optical fiber of any of the preceding claims, wherein the cladding portion further comprises a low-index trench and an outer cladding, the low-index trench positioned between the core portion and the outer cladding, the low-index trench having a refractive index $\Delta_T$, relative to pure silica glass, and the outer cladding having the relative refractive index $\Delta_{OC}$, wherein $\Delta C_{max} > \Delta_{OC} > \Delta_T$.

7. The optical fiber of claim 6,
   wherein the low-index trench directly contacts the core portion and the outer cladding, and/or
   wherein the low-index trench is formed from a silica-based glass,

8. The optical fiber of claims 6 or 7, wherein the low-index trench is formed from silica glass doped with a trench down-dopant, preferably wherein the trench down-dopant comprises boron, fluorine or combinations thereof.

9. The optical fiber of any of the preceding claims 6 to 8, wherein the cladding portion further comprises an inner cladding positioned between the core portion and the low-index trench, wherein the inner cladding has a refractive index $\Delta_{IC}$, relative to pure silica glass, and is formed from a silica-based glass.

10. The optical fiber according to any of the claims 6 to 9, wherein the low-index trench extends from the radius $r_C$ to a radius rT such that the low-index trench has a radial thickness TT = rT- $r_C$.

11. The optical fiber of any of the preceding claims 9 or 10, wherein $\Delta Cmax > \Delta IC$; $\Delta Cmax > \Delta OC$; $\Delta IC > \Delta T$; $\Delta Cmax > \Delta IC > \Delta T$; $\Delta Cmax > \Delta OC > \Delta T$.

EP 3 809 173 A1

**12.** The optical fiber of claim 10 or 11, wherein the outer cladding extends from the radius rT to a radius rOC of a glass portion of the optical fiber such that the outer cladding has a radial thickness of TOC = rOC-rT.

**13.** The optical fiber of claim 12, wherein the radius rOC is less than or equal to 62.5 microns and/or greater than or equal to 40 $\mu$m, and wherein the radius $r_C$ of the core is greater than or equal to 3 $\mu$m and less than or equal to 28 $\mu$m, preferably greater than or equal to 4 $\mu$m and less than or equal to 15 $\mu$m, more preferably greater than or equal to 6 $\mu$m and less than or equal to 14.5 $\mu$m.

**14.** The optical fiber of any of the preceding claims, where the optical fiber has microbend losses at 1550 nm wavelength of less than or equal to 0.2 dB/km for an effective area (Aeff) of greater than 120 $\mu$m$^2$, less than or equal to 0.1 dB/km for an effective area (Aeff) of from 100 $\mu$m$^2$ to 120 $\mu$m$^2$, or less than or equal to 0.05 dB/km for an effective area (Aeff) of less than 100 $\mu$m$^2$.

**15.** A method of providing a preform for an optical fiber, the method comprising:

forming a preform core comprising a silica-based composition;
forming a graded concentration profile of a dopant within the preform core;
consolidating the preform core to produce a consolidated preform core having a graded concentration profile of the dopant, where the graded concentration profile of the dopant produces a graded refractive index profile within the consolidated preform core, the graded refractive index profile having an alpha value greater than or equal to 1 and less than or equal to 8;
forming a preform cladding portion around the preform core, the preform cladding portion comprising at least a silica-based glass, wherein forming a graded concentration profile of a dopant comprises doping the preform core with a down-dopant, wherein doping forms a graded concentration profile of the down-dopant in which a concentration of the down-dopant is greatest at the outer radius of the porous preform core and decreases with decreasing radius,
wherein the down-dopant is fluorine,
further comprising the step of drawing the preform to produce an optical fiber.

FIG. 1

FIG. 2

FIG. 3

FIG. 4

FIG. 5
(PRIOR ART)

FIG. 6

FIG. 7

(PRIOR ART)

FIG. 8

FIG. 9
(PRIOR ART)

FIG. 10

FIG. 11

FIG. 12

FIG. 13

FIG. 14

FIG. 15

FIG. 16

FIG. 17

Europäisches
Patentamt

European
Patent Office

Office européen
des brevets

## EUROPEAN SEARCH REPORT

Application Number

EP 20 20 2317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/154911 A1 (BOOKBINDER DANA CRAIG [US] ET AL) 23 May 2019 (2019-05-23) * abstract * * * paragraphs [0006] - [0034], [0063] - [0070], [0073], [0095], [0104] - [0133] * * tables 1,2 * * claims 1-10 * * figures 1-3 * | 1-4,6, 8-15 | INV. G02B6/02 B29D11/00 C03B37/012 G02B6/028 |
| X | US 2016/304392 A1 (BOOKBINDER DANA CRAIG [US] ET AL) 20 October 2016 (2016-10-20) * abstract * * * paragraphs [0038] - [0050], [0053] - [0061], [0064] - [6672] * * table 1 * * claims 1-9 * * figures 2-4 * | 1-15 | |
| X | US 2014/352361 A1 (DAWES STEVEN BRUCE [US] ET AL) 4 December 2014 (2014-12-04) * abstract * * paragraphs [0054] - [0058], [0061] - [0066], [0113] - [0115] * * figures 1A,2-5 * | 1-15 | TECHNICAL FIELDS SEARCHED (IPC) G02B B29D C03B |
| X | EP 2 418 523 A2 (DRAKA COMTEQ BV [NL]) 15 February 2012 (2012-02-15) * abstract * * * paragraphs [0051] - [0055], [0060], [0065], [0072], [0073], [0081] - [0084], [0089] * * figures 2-5 * | 1-15 | |

-/--

The present search report has been drawn up for all claims

| Place of search | Date of completion of the search | Examiner |
|---|---|---|
| Berlin | 19 January 2021 | Moroz, Alexander |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 20 20 2317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 518 546 A1 (DRAKA COMTEQ BV [NL]) 31 October 2012 (2012-10-31) * abstract * * * paragraphs [0064], [0067], [0068], [0089], [0092], [0095], [0106], [0110] - [0112], [0157], [0168] - [0170] * * claim 5 * * figures 2,5,6,10-13 * ----- | 1-15 | |

TECHNICAL FIELDS
SEARCHED        (IPC)

The present search report has been drawn up for all claims

| Place of search | Date of completion of the search | Examiner |
|---|---|---|
| Berlin | 19 January 2021 | Moroz, Alexander |

EPO FORM 1503 03.82 (P04C01)

**ANNEX TO THE EUROPEAN SEARCH REPORT
ON EUROPEAN PATENT APPLICATION NO.**

EP 20 20 2317

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2021

| Patent document cited in search report | | Publication date | Patent family member(s) | | Publication date |
|---|---|---|---|---|---|
| US 2019154911 | A1 | 23-05-2019 | CN 111372899 A | | 03-07-2020 |
| | | | EP 3713886 A1 | | 30-09-2020 |
| | | | US 2019154911 A1 | | 23-05-2019 |
| | | | WO 2019100047 A1 | | 23-05-2019 |
| US 2016304392 | A1 | 20-10-2016 | CN 107810436 A | | 16-03-2018 |
| | | | EP 3283909 A1 | | 21-02-2018 |
| | | | JP 2018516386 A | | 21-06-2018 |
| | | | US 2016304392 A1 | | 20-10-2016 |
| | | | US 2018002221 A1 | | 04-01-2018 |
| | | | WO 2016168042 A1 | | 20-10-2016 |
| US 2014352361 | A1 | 04-12-2014 | US 2014352361 A1 | | 04-12-2014 |
| | | | WO 2014193801 A1 | | 04-12-2014 |
| EP 2418523 | A2 | 15-02-2012 | DK 2418523 T3 | | 09-01-2017 |
| | | | EP 2418523 A2 | | 15-02-2012 |
| | | | US 2012039361 A1 | | 16-02-2012 |
| EP 2518546 | A1 | 31-10-2012 | CN 102768382 A | | 07-11-2012 |
| | | | EP 2518546 A1 | | 31-10-2012 |
| | | | JP 5945447 B2 | | 05-07-2016 |
| | | | JP 2013033214 A | | 14-02-2013 |
| | | | US 2012275751 A1 | | 01-11-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7565820 B
- US 5410567 A
- US 7832675 B
- US 6027062 A
- EP 0479120 A2

**Non-patent literature cited in the description**

- **JEUNHOMME.** Single Mode Fiber Optics. Marcel Dekker, 1990, 39-44
- **P. MAZUMDER ; S. LOGUNOV ; S. RAGAHAVAN.** Analysis of excess scattering in optical fibers. *Appl.Optics,* 2004, vol. 96, 4042